# EUROPEAN PATENT SPECIFICATION

(11) **EP 2 039 900 B1**
(45) Date of publication and mention of the grant of the patent: **25.01.2012**
(21) Application number: 07790450.6
(22) Date of filing: 29.06.2007
(51) Int. Cl.: F01N 3/08, F01N 9/00, F02D 41/02

(54) **EXHAUST GAS PURIFIER FOR INTERNAL COMBUSTION ENGINE**
ABGASREINIGER FÜR VERBRENNUNGSMOTOR
PURIFICATEUR DE GAZ D'ÉCHAPPEMENT POUR MOTEUR À COMBUSTION INTERNE

(30) Priority: 30.06.2006 JP 2006181380
(43) Date of publication of application: 25.03.2009
(73) Proprietor: Toyota Jidosha Kabushiki Kaisha, Toyota-shi, Aichi 471-8571 (JP)
(72) Inventor: ASANUMA, Takamitsu, c/o TOYOTA JIDOSHA KABUSHIKI KAISHA, Toyota-shi, Aichi 4718571 (JP); HIROTA, Shinya, c/o TOYOTA JIDOSHA KABUSHIKI KAISHA, Toyota-shi, Aichi 4718571 (JP); HAYASHI, Kotaro, c/o TOYOTA JIDOSHA KABUSHIKI KAISHA, Toyota-shi, Aichi 4718571 (JP); YOSHIDA, Kohei, c/o TOYOTA JIDOSHA KABUSHIKI KAISHA, Toyota-shi, Aichi 4718571 (JP); HAYASHI, Atsushi, c/o TOYOTA JIDOSHA KABUSHIKI KAISHA, Toyota-shi, Aichi 4718571 (JP)
(74) Representative: Kopp, Stephan
(86) International application number: PCT/JP2007/063508
(87) International publication number: WO 2008/001950

(56) References cited:
- EP-A1- 1 491 736
- DE-A1- 10 001 432
- FR-A1- 2 838 479
- JP-A- 09 122 443
- JP-A- 2000 018 021
- JP-A- 2004 360 575
- JP-A- 2005 273 573
- US-B1- 6 367 246

## Description

### TECHNICAL FIELD

The present invention relates to an exhaust purification system of an internal combustion engine.

### BACKGROUND ART

Japanese Patent Publication (A) No. 6-173652 describes an internal combustion engine providing an exhaust purification system absorbing NOx (nitrogen oxides) in the exhaust gas in an exhaust passage. Here, the exhaust gas also contains SOx. The NOx absorbent described, in Japanese Patent Publication (A) No. 6-173652 absorbs SOx in addition to NOx so the amount of NOx which the NOx absorbent can absorb ends up being reduced by exactly the amount of absorption of SOx. Thus, in the exhaust purification system described in Japanese Patent Publication (A) No. 6-173652, an SOx absorbent for absorbing SOx in the exhaust gas is arranged upstream of the NOx absorbent and the SOx absorbent is used to absorb the SOx in the exhaust gas and prevent SOx from flowing into the NOx absorbent. A similar arrangement is also disclosed in JP 2000 018 021 A.

### DISCLOSURE OF THE INVENTION

In this regard, in general, an SOx absorbent absorbs the SOx in the exhaust gas when the air-fuel ratio of the exhaust gas flowing into it is an air-fuel ratio leaner than the stoichiometric air-fuel ratio and the temperature of the SOx absorbent is higher than a socalled activation temperature. On the other hand, the SOx absorbent releases SOx when the air-fuel ratio of the exhaust gas flowing into it becomes the stoichiometric air-fuel ratio or an air-fuel ratio richer than that and the temperature of the SOx absorbent becomes higher than a certain temperature higher than the activation temperature (hereinafter referred to as the "SOx release temperature"). Here, the SOx absorbent has the absorption of SOx in the exhaust gas as its inherent function, so when the SOx absorbent should be made to absorb SOx, it is not preferable that the SOx absorbent end up releasing SOx. Further, this applies not only to an exhaust purification system provided with an SOx absorbent for the purpose of absorbing the SOx in the exhaust gas, but also broadly to an exhaust purification system provided with an SOx trap for the purpose of trapping the SOx in the exhaust gas.

An object of the present invention is to reliably prevent an SOx trap from ending up releasing SOx when the SOx trap should be made to trap SOx in an internal combustion engine provided with an SOx trap trapping the SOx in the exhaust gas.

To solve the problem, in a first aspect of the present invention, there is provided an exhaust purification system of an internal combustion engine providing an SOx trap for trapping the SOx in the exhaust gas inside an exhaust passage, the SOx trap trapping the SOx in the exhaust gas when an air-fuel ratio of the exhaust gas flowing into the SOx trap is an air-fuel ratio leaner than a stoichiometric air-fuel ratio and a temperature of the SOx trap is lower than a predetermined temperature and releasing the trapped SOx when the air-fuel ratio of the exhaust gas flowing into the SOx trap is the stoichiometric air-fuel ratio or an air-fuel ratio richer than that and the temperature of the SOx trap is higher than the predetermined temperature and executing HC feed control feeding HC into the exhaust gas upstream of the SOx trap when a predetermined condition stands, which exhaust purification system of an internal combustion engine executes, as the HC feed control, first HC feed control feeding HC into the exhaust gas upstream of the SOx trap by a predetermined pattern when the amount of SOx which the SOx trap traps is smaller than a predetermined amount and executes, as the HC feed control, second HC feed control feeding HC into the exhaust gas upstream of the SOx trap by a pattern different from the predetermined pattern, which pattern keeping the temperature of the SOx trap from locally becoming higher than the predetermined temperature or suppressing the formation of a region in the exhaust gas flowing into the SOx trap where the air-fuel ratio becomes locally rich, when the amount of SOx which the SOx trap traps is larger than the predetermined amount.

In a second aspect of the present invention, in the first HC feed control, a predetermined amount of HC is fed into the exhaust gas upstream of the SOx trap per unit time, while in the second HC feed control, an amount of HC smaller than the predetermined amount is fed into the exhaust gas upstream of the SOx trap per unit time.

In a third aspect of the present invention, in the second HC feed control, HC with a higher diffusion ability into the exhaust gas than the HC fed into the exhaust gas upstream of the SOx trap in the first HC feed control is fed into the exhaust gas upstream of the SOx trap.

In a fourth aspect of the present invention, in the second HC feed control, HC is fed into the exhaust gas upstream of the SOx trap so that a lean degree of the air-fuel ratio of the exhaust gas flowing into the SOx trap is kept larger than a predetermined lean degree.

In a fifth aspect of the present invention, the predetermined lean degree is set larger the lower the temperature of the SOx trap.

In a sixth aspect of the present invention, in the second HC feed control, HC is fed into the exhaust gas upstream of the SOx trap so that the amount of local temperature rise of the SOx trap per unit time is kept smaller than the amount of local temperature rise of the SOx trap per unit time allowed in the first HC feed control.

In a seventh aspect of the present invention, in the second HC feed control, HC is fed into the exhaust gas upstream of the SOx trap so that an amount of temperature rise of the SOx trap as a whole per unit time is kept smaller than an amount of temperature rise of the SOx trap as a whole per unit time allowed in the first HC feed control.

In an eighth aspect of the present invention, a particulate filter trapping particulate matter in the exhaust gas is arranged in the exhaust passage downstream of the SOx trap, one predetermined condition is a burnaway condition where it is judged if the temperature of the particulate filter should be raised to a predetermined target temperature to burn away particulate matter trapped by the particulate filter, and, when the second HC feed control is executed when the burnaway condition stands, in the second HC feed control, HC is fed into the exhaust gas upstream of the SOx trap using as a target temperature a temperature lower than the target temperature in the first HC feed control in the case where the first HC feed control is executed when the burnaway condition stands.

In a ninth aspect of the present invention, in the second HC feed control, HC is fed into the exhaust gas upstream of the SOx trap so that a temperature amplitude of the SOx is kept smaller than a temperature amplitude of the SOx trap allowed in the first HC feed control.

In a 10th aspect of the present invention, an NOx absorbent absorbing the NOx in the exhaust gas is arranged in the exhaust passage downstream of the SOx trap, one predetermined condition is an NOx release condition where it is judged that the NOx absorbent should release NOx, and, when the second HC feed control is executed when the NOx release condition stands, in the second HC feed control, HC is fed into the exhaust gas upstream of the SOx trap so that a temperature amplitude of the SOx trap is kept smaller than a temperature amplitude of the SOx trap allowed in the first HC feed control in the case where the first HC feed control is executed when the NOx release condition stands.

In an 11th aspect of the present invention, an oxidation catalyst provided with an oxidizing ability higher than even the oxidizing ability of the SOx trap is arranged in the exhaust passage upstream of the SOx trap.

Below, the present invention will be able to be understood more clearly from the attached drawings and the description of preferred embodiments of the present invention.

### BRIEF DESCRIPTION OF THE DRAWINGS

FIG. 1 is a view showing a compression ignition type of internal combustion engine provided with an exhaust purification system of the present invention.
FIGS. 2(A) and (B) are views-showing the structure of a particulate filter.
FIG. 3 is a cross-sectional view of a surface part of a catalyst carrier of an NOx catalyst.
FIG. 4 is a cross-sectional view of a surface part of a catalyst carrier of an SOx trap.
FIGS. 5(A) to (C) are views for explaining NOx release control of an exhaust purification system of a first embodiment.
FIGS. 6(A) to (C) is a view for explaining NOx release control of an exhaust purification system of a second embodiment.
FIG. 7 is a view showing an example of a routine for executing NOx release control of an embodiment of the present invention.
FIGS. 8(A) to (C) are views for explaining the PM removal control of the exhaust purification system of a seventh embodiment.
FIGS. 9(A) to (C) are views for explaining the PM removal control of the exhaust purification system of an eighth embodiment.
FIG. 10 is a view showing an example of a routine for executing PM removal control of an embodiment of the present invention.
FIG. 11 is a view showing an example of a routine for executing NOx release control of an exhaust purification system of a 15th embodiment.
FIG. 12 is a view showing an example of a routine for executing PM removal control of an exhaust purification system of a 16th embodiment.
FIG. 13 is a view showing one of the compression ignition type of internal combustion engine to which the present invention can be applied.
FIG. 14 is a view showing another one of the compression ignition type of internal combustion engine to which the present invention can be applied.
FIG. 15 is a view showing still another one of the compression ignition type of internal combustion engine to which the present invention can be applied.

### BEST MODE FOR CARRYING OUT THE INVENTION

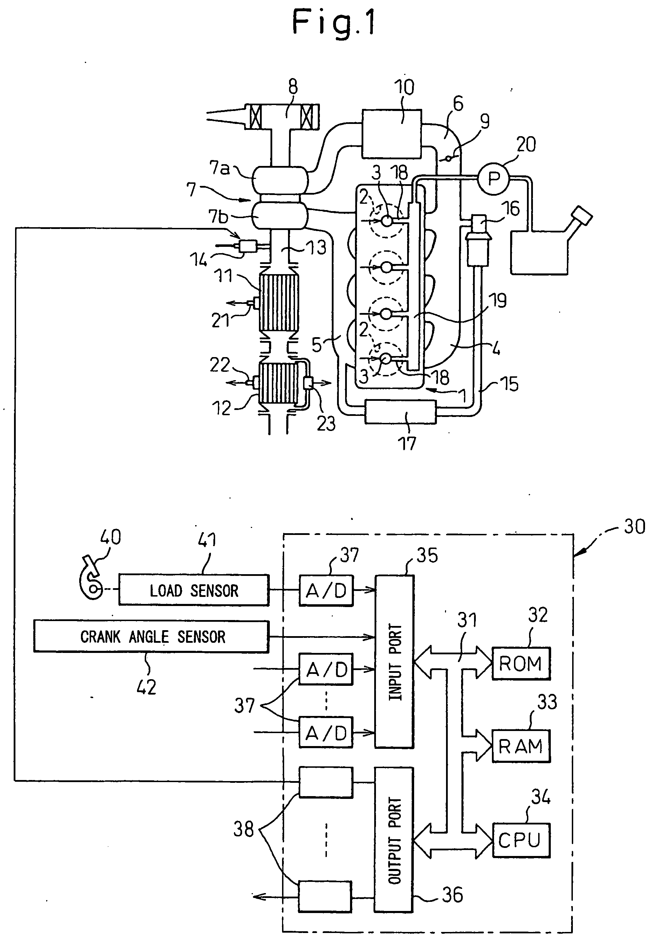

Below, an embodiment of the present invention will be explained with reference to the drawings. FIG. 1 shows a compression ignition type of internal combustion engine provided with an exhaust purification system of the present invention. In FIG. 1, 1 shows an engine body, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected to an air cleaner 8. Inside the intake duct 6 is arranged a throttle valve 9 driven by a step motor. Further, around the intake duct 6 is arranged a cooling device 10 for cooling the intake air flowing inside the intake duct 6. In the embodiment shown in FIG. 1, the engine cooling water is guided into the cooling device 10 where the engine cooling water is used to cool the intake air. On the other hand, the exhaust manifold 5 is connected to the inlet of the exhaust turbine 7b of the exhaust turbocharger 7, while the outlet of the exhaust turbine 7b is connected through an exhaust pipe 13 to the inlet of the SOₓ trap 11. The exhaust pipe 13 has attached to it an HC (hydrocarbon) feed valve 14 for feeding for example HC in the exhaust gas flowing through the inside of the exhaust pipe 13. Further, the outlet of the SOx trap 11 is connected to the NOx catalyst 12.

The exhaust manifold 5 and the intake manifold 4 are connected to each other through an exhaust gas recirculation (hereinafter referred to as the "EGR") passage 15. Inside the EGR passage 15 is arranged an electronic control type EGR control valve 16. Further, around the EGR passage 15 is arranged a cooling device 17 for cooling the EGR gas flowing through the inside of the EGR passage 15. In the embodiment shown in FIG. 1, the engine cooling water is guided inside the cooling device 17 where the engine cooling water is used to cool the EGR gas. On the other hand, each fuel injector 3 is connected through a fuel feed pipe 18 to a common rail 19. This common rail 19 is supplied inside it with fuel from an electronic control type variable discharge fuel pump 20. The fuel supplied to the inside of the common rail 19 is supplied through the fuel feed pipes 18 to the fuel injectors 3.

An electronic control unit 30 is comprised of a digital computer which is provided with components connected with each other by a bi-directional bus 31 such as a ROM (read only memory) 32, RAM (random access memory) 33, CPU (microprocessor) 34, input port 35, and output port 36. The SOₓ trap 11 has a temperature sensor 21 attached to it so as to detect the temperature of the SOₓ trap 11, while the NOx catalyst 12 has a temperature sensor 22 attached to it so as to detect the temperature of the NOx catalyst 12. The output signals of these temperature sensors 21 and 22 are input through the corresponding AD converters 37 to the input port 35. Further, the NOx catalyst 12 has a pressure difference sensor 23 attached to it for detecting the pressure difference before and after the NOx catalyst 12. The output signal of this pressure difference sensor 23 is input through the corresponding AD converter 37 to the input port 35.

An accelerator pedal 40 is connected to a load sensor 41 generating an output voltage proportional to the depression amount of the accelerator pedal 40. The output voltage of the load sensor 41 is input through the corresponding AD converter 37 to the input port 35. Further, the input port 35 has a crank angle sensor 42 generating an output pulse every time the crankshaft rotates by for example 15° connected to it. On the other hand, the output port 36 has the fuel injectors 3, throttle valve 9 drive step motor, HC feed valve 14, EGR control valve 16, and fuel pump 20 connected to it through corresponding drive circuits 38.

Next, the NOx catalyst 12 will be explained. The NOx catalyst 12 is carried on a monolithic carrier of a three-dimensional mesh structure or a pellet-shaped carrier or is carried on a particulate filter forming a honeycomb structure (hereinafter referred to as "filter"). In this way, the NOx catalyst 12 can be carried on various carriers, but below the case of carrying the NOx catalyst 12 on a filter will be explained.

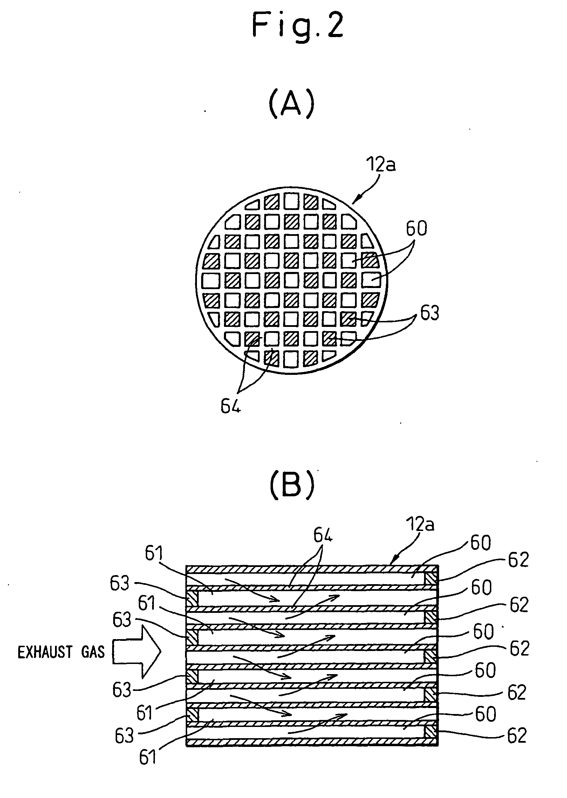

FIGS. 2(A) and (B) show the structure of the filter 12a carrying the NOx catalyst 12. Note that FIG. 2(A) shows a front view of the filter 12a, while FIG. 2(B) shows a side cross-sectional view of the filter 12a. As shown in FIGS. 2(A) and (B), the filter 12a forms a honeycomb structure and is provided with a plurality of exhaust flow passages 60, 61 extending in parallel with each other. These exhaust flow passages are comprised of exhaust gas inflow passages 60 with downstream ends closed by plugs 62 and exhaust gas outflow passages 61 with upstream ends closed by plugs 63. Note that the hatched parts in FIG. 2(A) show the plugs 63. Therefore, The exhaust gas inflow passages 60 and exhaust gas outflow passages 61 are alternately arranged via thin partition walls 64. In other words, the exhaust gas inflow passages 60 and exhaust gas outflow passages 61 are arranged so that each exhaust gas inflow passage 60 is surrounded by four exhaust gas outflow passages 61 and each exhaust gas outflow passage 61 is surrounded by four exhaust gas inflow passages 60.

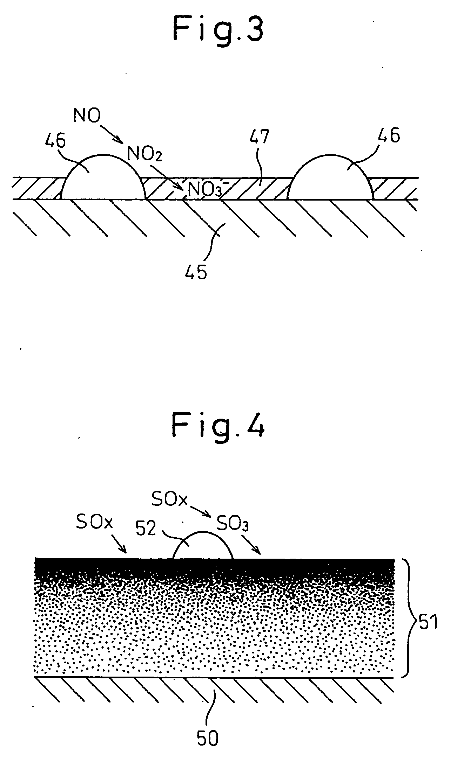

The filter 12a is for example formed from a porous material such as cordierite. Therefore, the exhaust gas flowing into the exhaust gas inflow passage 60, as shown by the arrows in FIG. 2(B), passes through the surrounding partition walls 64 and flows out into the adjoining exhaust gas outflow passages 61. When carrying the NOx catalyst 12 on the filter 12a in this way, the peripheral walls of the exhaust gas inflow passages 60 and exhaust gas outflow passages 61, that is, the two side surfaces of the partition walls 64 and the inside walls of the fine holes in the partition walls 64, carry, for example, a catalyst carrier comprised of alumina. FIG. 3 schematically shows a cross-section of the surface part of this catalyst carrier 45. As shown in FIG. 3, on the surface of the catalyst carrier 45, a precious metal catalyst 46 is carried diffused in it. Further, on the surface of the catalyst carrier 45, a layer of an NOx adsorbent 47 is formed.

Further, in the embodiment of the present invention, as the precious metal catalyst 46, platinum (Pt) is used. As the ingredient forming the NOx adsorbent 47, for example, at least one ingredient selected from potassium (K), sodium (Na), cesium (Cs), or another such alkali metal, barium (Ba), calcium (Ca), or another such alkali earth, and lanthanum (La), yttrium (Y), or another such rare earth is used.

If the ratio of the air and fuel (hydrocarbons) supplied inside the engine intake passage, combustion chambers 2, and exhaust passage upstream of the NOx catalyst 12 is referred to as the "air-fuel ratio of the exhaust gas", the NOx adsorbent 47 absorbs the NOx when the air-fuel ratio of the exhaust gas is leaner than even the stoichiometric air-fuel ratio and releases the absorbed NOx when the oxygen concentration in the exhaust gas falls in an "NOₓ absorption/release action".

That is, explaining the case of using barium (Ba) as the ingredient forming the NOx adsorbent 47 as an example, when the air-fuel ratio of the exhaust gas is lean, that is, when the oxygen concentration in the exhaust gas is high, the NO contained in the exhaust gas, as shown in FIG. 3, is oxidized on the platinum 46 and becomes NO₂, next this is absorbed in the NOx adsorbent 47 and, while bonding with the barium oxide (BaO), diffuses in the form of nitric acid ions (NO₃⁻) inside the NOx adsorbent 47. In this way, the NOx is absorbed inside the NOx adsorbent 47. So long as the oxygen concentration in the exhaust gas is high, NO₂ is produced on the surface of the platinum 46. So long as the NOx adsorption ability of the NOx adsorbent 47 is not saturated, the NO₂ is absorbed in the NOx adsorbent 47 and nitric acid ions (NO₃⁻) are produced.

As opposed to this, if supplying hydrocarbons from the HC feed valve 14 so as to make the air-fuel ratio of the exhaust gas the stoichiometric air-fuel ratio or richer than that, the oxygen concentration in the exhaust gas falls, so the reaction proceeds in the opposite direction (NO₃⁻→NO₂) and therefore the nitric acid ions (NO₃⁻) in the NOx adsorbent 47 are released in the form of NO₂ from the NOx adsorbent 47. Next, the released NOx is reduced by the unburned HC and CO contained in the exhaust gas.

In this way, when the air-fuel ratio of the exhaust gas is lean, that is, when combustion is performed under a lean air-fuel ratio, the NOx in the exhaust gas is absorbed in the NOx adsorbent 47. However, when combustion continues under a lean air-fuel ratio, during that time the NOx adsorption ability of the NOx adsorbent 47 ends up becoming saturated and therefore the NOx adsorbent 47 ends up no longer being able to absorb the NOx. Therefore, in the embodiment according to the present invention, before the adsorption ability of the NOx absorbent 47 becomes saturated, HC is supplied from the HC feed valve 14 so as to temporarily make the air-fuel ratio of the exhaust gas rich and thereby make the NOx be released from the NOx adsorbent 47.

However, exhaust gas contains SOₓ (sulfur oxides), that is, SO₂. If this SO₂ flows into the NOx catalyst 12, this SO₂ is oxidized at the platinum 46 and becomes SO₃. Next, this SO₃ is adsorbed in the NOx adsorbent 47 and, while bonding with the barium oxide (BaO), diffuses in the NOx adsorbent 47 in the form of sulfuric acid ions (SO₄²⁻) to produce stable sulfate (BaSO₄). However, the NOx adsorbent 47 has a strong basicity, so this sulfate (BaSO₄) is stable and hard to break down. With just making the air-fuel ratio of the exhaust gas rich, the sulfate (BaSO₄) will not break down and will remain as it is. Therefore, in the NOx adsorbent 47, as time elapses, the sulfate (BaSO₄) increases. Therefore, along with the elapse of time, the NOx amount which can be absorbed by the NOx adsorbent 47 falls.

However, in this case, as explained at the start, if making the air-fuel ratio of the exhaust gas flowing into the NOx catalyst 11 rich in the state of raising the temperature of the NOx catalyst 11 to the SOₓ release temperature of 600°C or more, the NOx adsorbent 47 is made to release the SOₓ. However, in this case, the NOx adsorbent 47 only releases a little SOₓ at a time. Therefore, to make the NOx adsorbent 47 release all of the absorbed SOₓ, the air-fuel ratio of the exhaust gas must be made rich over a long time and therefore there is the problem that a large amount of fuel or reducing agent becomes necessary. Further, the SOₓ released from the SOx adsorbent 47 is exhausted into the atmosphere. This is also not preferable.

Therefore, in the embodiment according to the present invention, an SOₓ trap 11 is arranged upstream of the NOx catalyst 12. This SOₓ trap 11 is used to trap the SOₓ contained in the exhaust gas and thereby prevent SOₓ from being sent into the NOx catalyst 12. Next, this SOₓ trap 11 will be explained.

This SOₓ trap 11 is comprised of for example a honeycomb structure monolithic catalyst and has a large number of exhaust gas circulation holes extending straight in the axial direction of the SOₓ trap 11. When forming the SOₓ trap 11 from a honeycomb structure monolithic catalyst in this way, the inner circumferential walls of the exhaust gas circulation holes carry a catalyst carrier comprised of for example alumina. FIG. 4 schematically shows the cross-section of the surface part of the catalyst carrier 50. As shown in FIG. 4, on the surface of the catalyst carrier 50, a coat layer 51 is formed and carries the precious metal catalyst 52 diffused on its surface.

In the embodiment according to the present invention, as the precious metal catalyst 52, platinum (Pt) is used. As the ingredient forming the coat layer 51, for example at least one element selected from potassium (K), sodium (Na), cesium (Cs), or another such alkali metal, barium (Ba), calcium (Ca), or another such alkali earth, and lanthanum (La), yttrium (Y), or another such rare earth is used. That is, the coat layer 51 of the SOx trap 11 exhibits a strong basicity.

Further, the SOx contained in the exhaust gas, mainly SO₂, as shown in FIG. 4, is oxidized on the platinum 52, then is trapped in the coat layer 51. That is, the SO₂ diffuses in the coat layer 51 in the form of sulfuric acid ions (SO₄²⁻) and forms a sulfate. Note that in the above-mentioned way, the coat layer 51 exhibits a strong basicity. Therefore, as shown in FIG. 4, part of the SO₂ contained in the exhaust gas is directly trapped in the coat layer 51.

Further, exhaust gas also contains particulate matter. The particulate matter contained in exhaust gas is trapped on the filter 12a carrying the NOx catalyst 12 and successively oxidized. However, if the amount of the trapped particulate matter becomes greater than the amount of the particulate matter oxidized, the particulate matter gradually deposits on the filter 12a. In this case, if the amount of buildup of the particulate matter increases, a drop in the engine output ends up being invited. Therefore, when the amount of buildup of the particulate matter increases, the builtup particulate matter must be removed. In this case, if raising the temperature of the filter 12a to 600°C or so under an excess of air, the builtup particulate matter is oxidized and removed.

Thus, in an embodiment of the present invention, when the amount of particulate matter built up on the filter 12a exceeds the allowable amount, the temperature of the filter 12a is raised under a lean air-fuel ratio of the exhaust gas and thereby the builtup particulate matter is oxidized and removed. Specifically speaking, in an embodiment of the present invention, when a pressure difference before and after the filter 12a detected by a differential pressure sensor 23 exceeds an allowable value, it is judged that the amount of the builtup particulate matter has exceeded the allowable amount. At this time, temperature elevation control is performed for raising the temperature of the filter 12a while keeping the air-fuel ratio of the exhaust gas flowing into the filter 12a lean.

In this regard, the SOx trapping action of the above-mentioned SOx trap 11 is performed when the air-fuel ratio of the exhaust gas flowing into it is an air-fuel ratio leaner than the stoichiometric air-fuel ratio and the temperature of the SOx trap 11 is higher than a certain constant temperature (hereinafter referred to as the "activation temperature"). On the other hand, the SOx trap 11 ends up releasing the trapped SOx when the air-fuel ratio of the exhaust gas flowing into it becomes the stoichiometric air-fuel ratio or richer and its temperature becomes higher than a certain constant temperature higher than the activation temperature (hereinafter referred to as the "SOx release temperature"). Therefore, to prevent the SOx trap 11 from releasing SOx, it is necessary to at least prevent the air-fuel ratio of the exhaust gas flowing into the SOx trap 11 from becoming the stoichiometric air-fuel ratio or richer and to prevent the temperature of the SOx trap 11 from becoming higher than even the SOx release temperature.

In this regard, even if the temperature of the SOx trap 11 as a whole becomes lower than the SOx release temperature, sometimes the temperature will locally become higher than even the SOx release temperature. At this time, the amount of SOx being trapped in the SOx trap 11 (hereinafter referred to as "SOx trap amount") becomes relatively large and exhaust gas of the stoichiometric air-fuel ratio or a richer air-fuel ratio flows into the SOx trap 11, so there is a possibility of part of the SOx trap where the temperature locally becomes higher than the SOx release temperature releasing SOx. Further, even if the air-fuel ratio of the exhaust gas flowing into the SOx trap 11 becomes lean overall, sometimes it locally becomes rich. At this time, if the SOx trap amount of the SOx trap 11 becomes relatively large and the temperature of the SOx trap 11 becomes higher than the SOx release temperature, there is a possibility that part of the SOx trap 11 will release SOx. That is, to reliably prevent SOx from being released from the SOx trap 11, when the SOx trap amount of the SOx trap 11 becomes relatively large and the air-fuel ratio of the exhaust gas flowing into the SOx trap 11 becomes the stoichiometric air-fuel ratio or richer or when it is estimated it will become the stoichiometric air-fuel ratio or richer, it is necessary to prevent the temperature of the SOx trap 11 from becoming higher than the SOx release temperature even locally. In the same way, to reliably prevent the SOx trap 11 from releasing SOx, when the SOx trap amount of the SOx trap 11 becomes relatively large and the temperature of the SOx trap 11 becomes higher than the SOx release temperature or is estimated as becoming higher, it is necessary to prevent the air-fuel ratio of the exhaust gas flowing into the SOx trap 11 from becoming the stoichiometric air-fuel ratio or richer even locally.

Here, in the above-mentioned way, when trying to make the NOx absorbent 47 release NOx, HC is fed from the HC feed valve 14 into the exhaust gas to make the air-fuel ratio of the exhaust gas flowing into the NOx catalyst 12 the stoichiometric air-fuel ratio or richer. Therefore, at this time, the air-fuel ratio of the exhaust gas flowing into the SOx trap 11 also becomes the stoichiometric air-fuel ratio or richer. Therefore, at this time, if the SOx trap amount of the SOx trap 11 is relatively large, to reliably prevent the SOx trap 11 from releasing SOx, it is necessary to prevent the temperature of the SOx trap 11 from becoming higher than the SOx release temperature even locally.

Thus, in an embodiment of the present invention, as the NOx release control for making the NOx absorbent 47 release NOx, when the SOx trap amount of the SOx trap 11 is smaller than a predetermined amount (hereinafter referred to as "the predetermined amount"), just NOx release control for making the NOx absorbent 47 release NOx (hereinafter referred to as "ordinary NOx release control") is executed, while when the SOx trap amount of the SOx trap 11 is larger than the predetermined amount, SOx release suppression/NOx release control for keeping the SOx trap 11 from releasing SOx while making the NOx absorbent 47 release NOx is executed.

Next, ordinary NOx release control and SOx release suppression/NOx release control employed as the NOx release control of an exhaust purification system of the first embodiment will be explained. Note that in the following description, the feed of HC from the HC feed valve 14 into the exhaust gas will be referred to as "HC feed", the amount of HC fed from the HC feed valve 14 into the exhaust gas per unit time in each HC feed will be referred to as the "HC feed rate", the time during which the HC is fed from the HC feed valve 14 into the exhaust gas in one HC feed will be referred to as the "HC feed time", the time interval at which each HC feed is performed will be referred to as the "HC feed interval", and the frequency by which HC feed is performed in one ordinary NOx release control or SOx release suppression/NOx release control will be referred to as the "HC feed frequency".

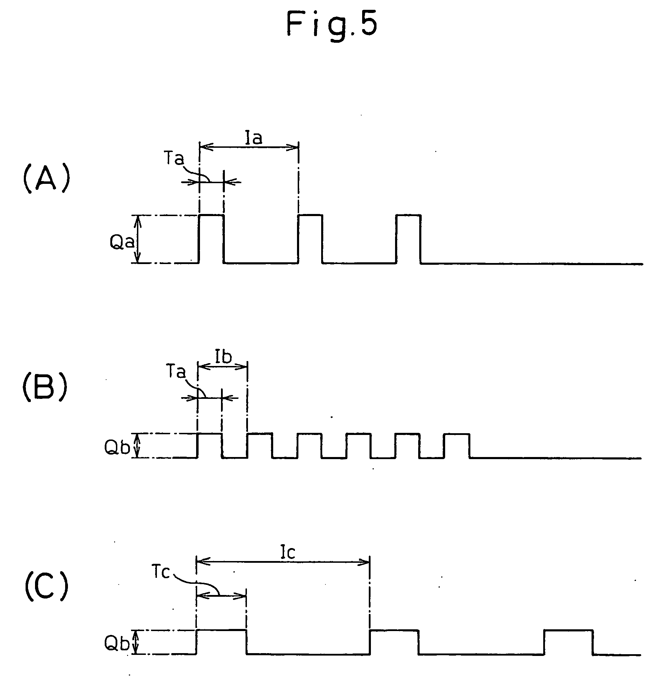

The ordinary NOx release control of the first embodiment is performed when it is judged that the NOx absorbent 47 should release NOx and when the SOx trap amount of the SOx trap 11 is smaller than the predetermined amount. In this ordinary NOx release control, as shown in FIG. 5(A), HC feed with an HC feed rate of a predetermined HC feed rate (hereinafter referred to as an "ordinary HC feed rate") Qa and with an HC feed time of a predetermined HC feed time (hereinafter referred to as an "ordinary HC feed time") Ta is performed at a predetermined HC feed interval (hereinafter referred to as the "ordinary HC feed interval") Ia by a predetermined HC feed frequency (hereinafter referred to as an "ordinary HC feed frequency", in the example shown in FIG. 5(A), three times).

Note that in the ordinary NOx release control in the first embodiment, the HC feed rate in each HC feed, the HC feed time in each HC feed, and the HC feed frequency are set so that the total amount of HC fed to the NOx catalyst 12 when all of the HC feed operations end becomes a sufficient HC amount for making the NOx absorbent 47 release a predetermined amount of NOx (hereinafter referred to as the "predetermined HC amount"). Therefore, according to the ordinary NOx release control of the first embodiment, it is possible to make the NOx absorbent 47 release a predetermined amount of NOx.

On the other hand, the SOx release suppression/NOx release control of the first embodiment is performed when it is judged that the NOx absorbent 47 should release NOx and when the SOx trap amount of the SOx trap 11 becomes greater than the predetermined amount. In this SOx release suppression/NOx release control, as shown in FIG. 5(B), HC feed with an HC feed rate of the HC feed rate Qb smaller than the ordinary HC feed rate Qa and with an HC feed time of a time Ta equal to the ordinary HC feed time Ta is performed at an interval Ib shorter than the ordinary HC feed interval Ia by a frequency larger than the ordinary HC feed frequency. According to this, in one HC feed, the amount of HC fed from the HC feed valve 14 into the exhaust gas is small, so the HC fed from the HC feed valve 14 easily diffuses in the exhaust gas. For this reason, formation of a region in the exhaust gas where the air-fuel ratio locally very rich is suppressed, so the temperature of the SOx trap 11 is kept from becoming higher than the locally SOx release temperature. Therefore, the SOx trap 11 is reliably kept from releasing SOx.

That is, if there is a region in the exhaust gas where the air-fuel ratio locally becomes very rich, that is, a region in the exhaust gas where locally HC is included in a very large amount, the HC deposits to a partial region of the SOx trap 11 when the exhaust gas flows into the SOx trap 11. If the deposited HC is burned all at once in that partial region of the SOx trap 11, there is a possibility that the temperature of that partial region will become higher than the SOx release temperature. However, according to the SOx release suppression/NOx release control of the first embodiment, formation of a region in the exhaust gas where the air-fuel ratio locally becomes very rich is suppressed, so the temperature of the partial region of the SOx trap 11 is kept from becoming higher than the SOx release temperature. Therefore, the temperature of the SOx trap 11 is kept from locally becoming higher than the SOx release temperature and the SOx trap 11 is reliably kept from releasing SOx.

Note that in the SOx release suppression/NOx release control of the first embodiment, as shown in FIG. 5(C), HC feed with an HC feed rate of an HC feed rate Qb smaller than the ordinary HC feed rate Qa and with an HC feed time of a time Tc longer than the ordinary HC feed time may be performed at an interval Ic longer than the ordinary HC feed interval Ia by the same frequency as the ordinary HC feed frequency. According to this, the HC feed rate in each HC feed operation is small, so the HC fed from the HC feed valve 14 easily diffuses in the exhaust gas. For this reason, the temperature of the SOx trap 11 is kept from locally becoming higher than the SOx release temperature, so the SOx trap 11 is reliably kept from releasing SOx.

Note that in the SOx release suppression/NOx release control of the first embodiment, preferably the HC feed rate in each HC feed, the HC feed time in each HC feed, and the HC feed frequency are set so that the total amount of HC fed to the NOx catalyst 12 when all of the HC feed operations end becomes the predetermined HC amount. Thus, in the example shown in FIG. 5(B), the HC feed rate is made the HC feed rate Qb of half of the ordinary HC feed rate Qa, the HC feed time is made the time Ta equal to the ordinary HC feed time Ta, and the HC feed frequency is made a frequency double the ordinary HC feed frequency. Note that in the example shown in FIG. 5(B), the HC feed interval is made an interval Ib of half of the ordinary HC feed interval Ia.

Further, in the example shown in FIG. 5(C), the HC feed rate is made the HC feed rate Qb of half of the ordinary HC feed rate Qa, the HC feed time is made the time Tc of double the ordinary HC feed time Ta, and the HC feed frequency is made the same frequency as the ordinary HC feed frequency.

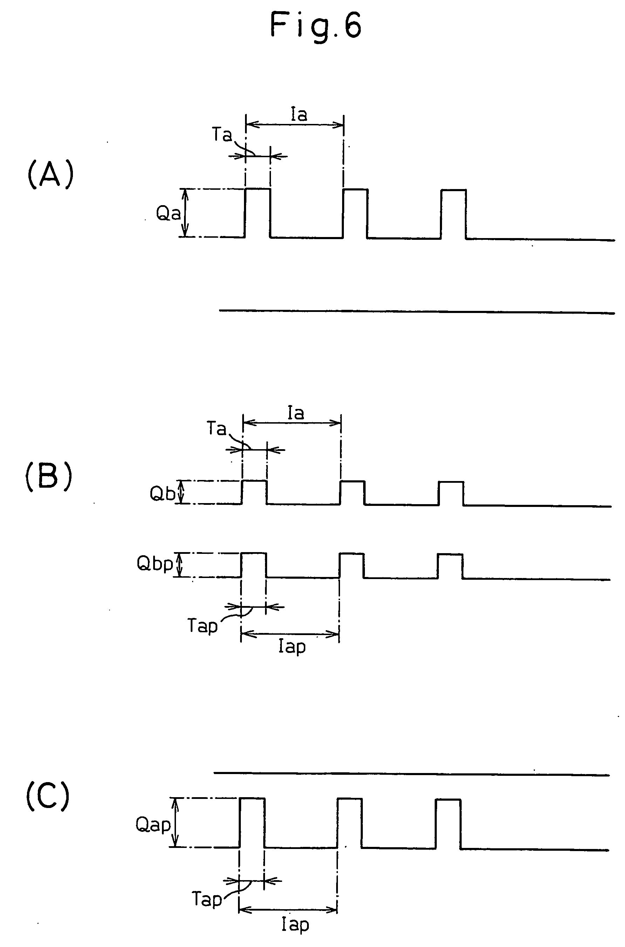

Next, NOx release control of an exhaust purification system of the second embodiment will be explained with reference to FIG. 6. Note that in FIGS. 6(A) to (C), the upper line shows the feed of HC from the HC feed valve 14 into the exhaust gas, while the lower line shows the injection of fuel from the fuel injector 3 in the latter half of the expansion stroke or during an exhaust stroke of a specific cylinder. Further, in the following explanation, the injection of fuel from the fuel injector 2 in the latter half of the expansion stroke or during the exhaust stroke of a specific cylinder will be referred to as the "post fuel injection", the amount of fuel injected from the fuel injector 2 per unit time in each post fuel injection will be referred to as the "post fuel injection rate", the time during which fuel is injected from the fuel injector 2 in one post fuel injection will be referred to as the "post fuel injection time", the time interval at which each post fuel injection is performed will be referred to as the "post fuel injection interval", and the frequency one post fuel injection is performed will be referred to as the "post fuel injection frequency".

In the NOx release control of the second embodiment, when it is judged that the NOx absorbent 47 should release NOx (that is, when the NOx release condition stands) and the SOx trap amount of the SOx trap 11 is smaller than the predetermined amount (that is, when the SOx release suppression condition does not stand), ordinary NOx release control is executed. In this ordinary NOx release control, as shown by the upper line of FIG. 6(A), an HC feed with an HC feed rate of an HC feed rate Qa equal to the ordinary HC feed rate Qa and with an HC feed time of a time Ta equal to the ordinary HC feed time Ta is performed at intervals Ia equal to the ordinary HC feed intervals Ia by the same frequency as the ordinary frequency. Further, at this time, as shown by the lower line of FIG. 6(A), none of the cylinders performs post fuel injection. Of course, in the NOx release control of the second embodiment as well, the HC feed rate in each HC feed, the HC feed time in each HC feed, and the HC feed frequency are set so that the total amount of HC fed to the NOx catalyst 12 when all of the HC feed operations end becomes the predetermined HC amount.

On the other hand, in the NOx release control of the second embodiment, when the NOx release condition stands and the SOx trap amount of the SOx trap 11 is larger than the predetermined amount (that is, when the SOx release suppression condition stands), SOx release suppression/NOx release control is executed. In this SOx release suppression/NOx release control, as shown by the upper line of FIG. 6(B), HC feed with an HC feed rate of an HC feed rate Qb smaller than the ordinary HC feed rate Qa and with an HC feed time of a time Ta equal to the ordinary feed time is performed at an interval Ia equal to the ordinary HC feed interval Ia by the same frequency as the ordinary frequency and, as shown by the lower line of FIG. 6(B), post fuel injection with a post fuel injection rate of a post fuel injection rate Qbp smaller than the ordinary HC feed rate Qa and with a post fuel injection time of a time Tap equal to the ordinary HC feed time Ta is performed at an interval Iap equal to the ordinary HC feed interval Ia by the same frequency as the ordinary HC feed frequency. According to this, the amount of HC fed from the HC feed valve 14 into the exhaust gas in one HC feed is small, so the HC fed from the HC feed valve 14 easily diffuses in the exhaust gas. For this reason, the HC injected from the HC feed valve 14 is kept from causing the temperature of the SOx trap 11 to locally become higher than the SOx release temperature. Furthermore, the fuel injected from the fuel injector 3 at a specific cylinder in the latter half of the expansion stroke or during the exhaust stroke is modified by the heat in the cylinder and lightened. The thus lightened fuel passes through the SOx trap 11 and is fed to the NOx catalyst 12, but this lightened fuel easily diffuses in the exhaust gas. For this reason, the fuel injected from the fuel injector 3 at a specific cylinder in the latter half of the expansion stroke or during the exhaust stroke is kept from causing the temperature of the SOx trap 11 from locally becoming higher than the SOx release temperature. Therefore, the SOx trap 11 is reliably kept from releasing SOx.

Note that in SOx release suppression/NOx release control of the second embodiment, as shown in FIG. 6(C), it is also possible to use just post fuel injection to feed HC (fuel) to the NOx catalyst 12. That is, as shown by the lower line of FIG. 6(C), post fuel injection with a post fuel injection rate of a post fuel injection rate Qap equal to the ordinary HC feed rate Qa and with a post fuel injection time of a time Tap equal to the ordinary HC feed time Ta may be performed at an interval Iap equal to the ordinary HC feed interval Ia by the same frequency as the ordinary HC feed frequency. Of course, at this time, as shown by the upper line of FIG. 6(C), HC is not fed from the HC feed valve 14 into the exhaust gas. According to this, the fuel (HC) passing through the SOx trap 11 and fed to the NOx catalyst 12 is lightened fuel, so easily diffuses in the exhaust gas. For this reason, the temperature of the SOx trap 11 is kept from locally becoming higher than the SOx release temperature. Therefore, the SOx trap 11 is reliably kept from releasing SOx.

Note that in SOx release suppression/NOx release control of the second embodiment, the HC feed rate in each HC feed, the HC feed time in each HC feed, and the HC feed frequency and the post fuel injection rate at each post fuel injection, the post fuel injection time at each post fuel injection, and the post fuel injection frequency are preferably set so that the total amount of HC (fuel) fed to the NOx catalyst 12 when all of the HC feed operations and all of the post fuel injections end becomes the predetermined HC (fuel) amount. Thus, in the example shown in FIG. 6(B), the HC feed rate is made an HC feed rate Qb of half of the ordinary HC feed rate Qa, the HC feed time is made a time Ta equal to the ordinary HC feed time Ta, the HC feed frequency is made a frequency equal to the ordinary HC feed frequency, the post fuel injection rate is made a post fuel injection rate Qbp of half of the ordinary HC feed rate Qa, the post injection time is made a time Tap equal to the ordinary HC feed time Ta, and the post fuel injection frequency is made a frequency equal to the ordinary HC feed frequency. Note that in the example shown in FIG. 6(B), the HC feed interval and the post fuel injection interval are made intervals Ia, Iap equal to the ordinary HC feed interval Ia.

Further, in the example shown in FIG. 6(C), the post fuel injection rate is made a post fuel injection rate Qap equal to the ordinary HC feed rate Qa, the post fuel injection time is made a time Tap equal to the ordinary HC feed time Ta, and the post fuel injection frequency is made a frequency equal to the ordinary HC feed frequency. Note that in the example shown in FIG. 6(C), the post fuel injection interval is made an interval Iap equal to the ordinary HC feed interval Ia.

Note that in the example shown in FIG. 6, the post fuel injection is shown executed at the same timing as the HC feed, but the post fuel injection timing is controlled based on the crank angle of the internal combustion engine, so strictly speaking, in most cases, the post fuel injection timing will not become the same timing as the HC feed timing, but will deviate from it somewhat. Further, in the example shown in FIG. 6, the post fuel injection interval was explained as equal to the ordinary HC feed interval, but for the same reason, strictly speaking, in most cases, the post fuel injection interval will not become equal to the ordinary HC feed interval, but will deviate from it somewhat.

Note that when performing post fuel injection to feed fuel to the NOx catalyst 12, the HC fed to the NOx catalyst when performing the post fuel injection in the latter half of the expansion stroke has a higher diffusion ability in the exhaust gas compared with HC fed to the NOx catalyst 12 when performing the post fuel injection during the exhaust stroke. Thus, in the above-mentioned embodiment, as NOx release control, only post fuel injection is employed as the method of feeding HC to the NOx catalyst 12. In ordinary NOx release control, post fuel injection is performed during the exhaust stroke to feed HC to the NOx catalyst 12. On the other hand, in SOx release suppression/NOx release control, it is also possible to feed HC to the NOx catalyst 12 by performing post fuel injection in the latter half of the expansion stroke. This also enables the SOx trap 11 to be reliably kept from releasing SOx.

Next, NOx release control of an exhaust purification system of a third embodiment will be explained. In the NOx release control of the third embodiment, when the NOx release condition stands and the SOx release suppression condition does not stand, control the same as the ordinary NOx release control of the first embodiment is executed.

On the other hand, in NOx release control of the third embodiment, when the NOx release condition stands and the SOx release suppression condition stands, SOx release suppression/NOx release control is executed In this SOx release suppression/NOx release control, in the same way as the ordinary NOx release control of the above-mentioned first embodiment, the ordinary HC feed rate, ordinary HC feed time, and, ordinary HC feed interval are used for performing each HC feed by an ordinary HC feed frequency, but HC lightened by fractional distillation is prepared in advance and part of the HC fed from the HC feed valve 14 into the exhaust gas in each HC feed is made this lightened HC. As explained above, lightened HC easily diffuses in the exhaust gas. For this reason, according to the SOx release suppression/NOx release control of the third embodiment, the temperature of the SOx trap 11 is kept from locally becoming higher than the SOx release temperature. Therefore, the SOx trap 11 is reliably kept from releasing SOx.

Next, NOx release control of an exhaust purification system of a fourth embodiment will be explained. In the NOx release control of the fourth embodiment, when the NOx release condition stands and the SOx release suppression condition does not stand, control the same as the ordinary NOx release control of the first embodiment is executed.

On the other hand, in the NOx release control of the fourth embodiment, when the NOx release condition stands and the SOx release suppression condition stands, SOx release suppression/NOx release control is executed. In this SOx release suppression/NOx release control, the HC feed rate in each HC feed, the HC feed time in each HC feed, and the HC feed interval are controlled so that the temperature of the NOx catalyst 12 is kept lower than the temperature of the NOx catalyst 12 corresponding to the temperature of the SOx trap 11 at which the HC in the exhaust gas will end up burning all at once in the SOx trap 11 (hereinafter referred to as the "maximum NOx catalyst temperature"). That is, if the temperature of the NOx catalyst 12 is higher than the maximum NOx catalyst temperature, the temperature of the SOx trap 11 becomes higher than the temperature at which the HC flowing into it ends up being made to burn all at once. In this case, when the HC fed from the HC feed valve 14 passes through the SOx trap 11, there is a possibility that it will burn all at once, the temperature of the SOx trap 11 will locally become higher than the SOx release temperature, and the SOx trap 11 will release SOx. On the other hand, according to SOx release suppression/NOx release control of the fourth embodiment, the temperature of the NOx catalyst 12 is kept lower than the maximum NOx catalyst temperature, so the HC flowing into the SOx trap 11 is kept from burning all at once. For this reason, the temperature of the SOx trap 11 is kept from locally becoming higher than the SOx release temperature. Therefore, the SOx trap 11 is reliably kept from releasing SOx.

Note that in the SOx release suppression/NOx release control of the fourth embodiment, the HC feed rate in each HC feed, the HC feed time in each HC feed, and the HC feed frequency are preferably set so that the total amount of HC fed into the NOx catalyst 12 when all of the HC feed operations end becomes the predetermined amount.

Next, NOx release control of an exhaust purification system of a fifth embodiment will be explained. In the NOx release control of the fifth embodiment, when the NOx release condition stands and the SOx release suppression condition does not stand, control the same as the ordinary NOx release control of the first embodiment is executed.

On the other hand, in the NOx release control of the fifth embodiment, when the NOx release condition stands and the SOx release suppression condition stands, SOx release suppression/NOx release control is executed. In this SOx release suppression/NOx release control, the HC feed rate in each HC feed, the HC feed time in each HC feed, and the HC feed interval are controlled so that the amplitude of the rise and fall of the temperature of the NOx catalyst 12 (hereinafter referred to as "temperature amplitude") is kept smaller than the temperature amplitude of the NOx catalyst 12 allowed in ordinary NOx release control. That is, in SOx release suppression/NOx release control, HC feed is intermittently performed, so the NOx catalyst 12 is intermittently fed HC. Further, when HC flows into the NOx catalyst 12, the heat of reaction of the HC in the NOx catalyst 12 causes the temperature of the NOx catalyst 12 to rise, then fall. Here, the temperature amplitude of the NOx catalyst 12 being large means the amplitude of the rise or fall of the temperature of the SOx trap 11 is also large. Further, in this case, the temperature of the SOx trap 11 may at least locally become higher than the SOx release temperature. Here, if the SOx trap amount of the SOx trap 11 is greater than the predetermined amount, the SOx trap 11 may release SOx. Thus, in the SOx release suppression/NOx release control of the fifth embodiment, the HC feed rate in each HC feed, the HC feed time in each HC feed, and the HC feed interval are controlled so that the temperature amplitude of the NOx catalyst 12 is kept smaller than the temperature amplitude of the NOx catalyst 12 allowed in ordinary NOx release control. According to this, the temperature of the SOx trap 11 is kept from locally becoming higher than the SOx release temperature. Therefore, the SOx trap 11 is reliably kept from releasing SOx.

Note that in the SOx release suppression/NOx release control of the fifth embodiment, the HC feed rate in each HC feed, the HC feed time in each HC feed, and the HC feed frequency are preferably set so that the total amount of HC fed into the NOx catalyst 12 when all of the HC feed operations end becomes the predetermined amount.

Next, the NOx release control of the exhaust purification system of a sixth embodiment will be explained. In the NOx release control of the sixth embodiment, when the NOx release condition stands and the SOx release suppression condition does not stand, control the same as the ordinary NOx release control of the above-mentioned first embodiment is executed.

On the other hand, in the NOx release control of the sixth embodiment, when the NOx release condition stands and the SOx release suppression condition stands, the SOx release suppression/NOx release control is executed. In this SOx release suppression/NOx release control, the HC feed rate in each HC feed, the HC feed time in each HC feed, and the HC feed interval are controlled so that the rich degree of the air-fuel ratio of the exhaust gas fed into the NOx catalyst 12 is kept smaller than the target rich degree in ordinary NOx release control. That is, when the rich degree of the air-fuel ratio of the exhaust gas flowing into the NOx catalyst 12 is large, the rich degree of the air-fuel ratio of the exhaust gas flowing into the SOx trap 11 also becomes large. Further, in this case, a region in the exhaust gas flowing into the SOx trap 11 where the air-fuel ratio locally becomes very rich may be formed. However, according to the SOx release suppression/NOx release control of the sixth embodiment, formation of a region in the exhaust gas flowing into the SOx trap 11 where the air-fuel ratio locally becomes very rich is suppressed. For this reason, the temperature of the SOx trap 11 is kept from locally becoming higher than the SOx release temperature. Therefore, the SOx trap 11 is reliably kept from releasing SOx.

Note that in the SOx release suppression/NOx release control of the sixth embodiment, the rich degree of the air-fuel ratio of the exhaust gas fed into the NOx catalyst 12 is for example estimated from the output of an air-fuel ratio sensor provided in the exhaust pipe downstream of the NOx catalyst 12.

Further, as explained above, the HC flowing into the SOx trap 11 deposits at a partial region of the SOx trap 11. Here, if the temperature of the region of the SOx trap 11 where the HC deposits is low, the deposited HC will not burn but will remain deposited there. Here, if the temperature of the region of the SOx trap 11 where HC has deposited rises to the combustion temperature of HC, the deposited HC may burn all at once. That is, the lower the temperature of the SOx trap 11, the more possible it is that the HC deposited on the SOx trap 11 will burn all at once. Thus, in the SOx release suppression/NOx release control of the above-mentioned sixth embodiment, when the rich degree of the air-fuel ratio of the exhaust gas fed to the NOx catalyst 12 is kept smaller than the target rich degree in ordinary NOx release control, the lower the temperature of the SOx trap 11, the smaller the rich degree of the air-fuel ratio of the exhaust gas fed to the NOx catalyst 12 may be kept.

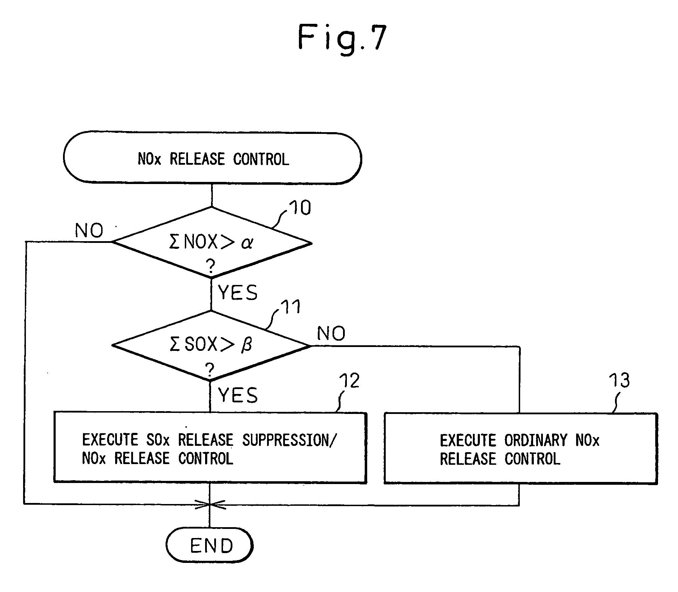

FIG. 7 shows an example of the routine for executing the NOx release control of an embodiment of the present invention. In the routine of FIG. 7, first, at step 10, it is judged if the NOx amount ∑NOX absorbed in the NOx absorbent 47 is greater than an allowable value α (∑NOX>α) (that is, whether the NOx release condition stands). Here, when it is judged that ∑NOX≤α, the routine is ended as is. On the other hand, when it is judged that ∑NOX>∑, the routine proceeds to step 11 where it is judged if the SOx trap amount ∑SOX of the SOx trap 11 is greater than a predetermined amount P (∑SOX>β) (that is, whether the SOx release suppression condition stands).

When it is judged at step 11 that ∑SOX>β, the routine proceeds to step 12 where one of the SOx release suppression/NOx release control of the above-mentioned first embodiment to sixth embodiment is executed. On the other hand, when it is judged at step 11 that ∑SOX≤β, the routine proceeds to step 13 where one of the ordinary NOx release control of the above-mentioned first embodiment to sixth embodiment is executed.

In this regard, when, as explained above, the amount of particulate matter built up on the filter 12a exceeds the allowable value (that is, the PM removal condition stands), control is executed for keeping the air-fuel ratio of the exhaust gas flowing into the filter 12a lean while raising the temperature of the filter 12a to a temperature of at least the temperature where the particulate matter burns (hereinafter referred to as "PM combustion temperature") to burn off the particulate matter deposited on the filter 12a (hereinafter referred to as "PM removal control"). In this PM removal control, to keep the air-fuel ratio of the exhaust gas flowing into the filter 12a lean while raising the temperature of the filter 12a, HC is fed from the HC feed valve 14 into the exhaust gas in a range where the air-fuel ratio of the exhaust gas flowing into the filter 12a is kept lean. That is, if the HC feed valve 14 feeds HC into the exhaust gas, HC is fed to the filter 12a. At this time, if the air-fuel ratio of the exhaust gas flowing into the filter 12a is kept lean, the HC burns on the filter 12a. The heat of combustion generated at that time causes the temperature of the filter 12a to rise. In this way, basically, when PM removal control is executed, even if the HC feed valve 14 feeds HC into the exhaust gas, the air-fuel ratio of the exhaust gas flowing into the filter 12a is kept lean, so the air-fuel ratio of the exhaust gas flowing into the SOx trap 11 is also kept lean. Therefore, at this time, basically, the SOx trap 11 will not release SOx.

In this regard, even if the air-fuel ratio of the exhaust gas flowing into the SOx trap 11 was kept lean during the execution of the PM removal control, if the SOx trap amount of the SOx trap 11 becomes relatively large, if there are regions in the exhaust gas flowing into the SOx trap 11 where the air-fuel ratio is locally rich and there are parts of the SOx trap 11 where the temperature is locally higher than the SOx release temperature, part of the SOx trap 11 may release SOx. Further, in PM removal control, HC is fed from the HC feed valve 14 so as to raise the temperature of the filter 12a to a temperature of at least the relatively high temperature PM combustion temperature, but part of the HC fed from the HC feed valve 14 burns at the SOx trap 11. Therefore, during execution of PM removal control, the temperature of the SOx trap 11 also becomes a relatively high temperature. For this reason, during execution of PM removal control, the temperature of the SOx trap 11 can be said to easily locally become higher than the SOx release temperature. Whichever the case, to reliably keep the SOx trap 11 from releasing SOx during execution of PM removal control, when the SOx trap amount of the SOx trap 11 is relatively large, it is necessary to suppress the formation of a region in the exhaust gas flowing into the SOx trap 11 where the air-fuel ratio locally forms a rich region or to keep the temperature of the SOx trap 11 from locally becoming higher than the SOx release temperature.

Thus, in an embodiment of the present invention, as the PM removal control for removing the particulate matter built up on the filter 12a, when the SOx trap amount of the SOx trap 11 is smaller than the predetermined amount, just PM removal control for burning off the particulate matter built up on the filter 12a (hereinafter referred to as "ordinary PM removal control") is executed. When the SOx trap amount of the SOx trap 11 is larger than the predetermined amount, PM removal control for keeping the SOx trap 11 from releasing SOx while burning off the particulate matter built up on the filter 12a (hereinafter referred to as "SOx release suppression/PM removal control") is executed.

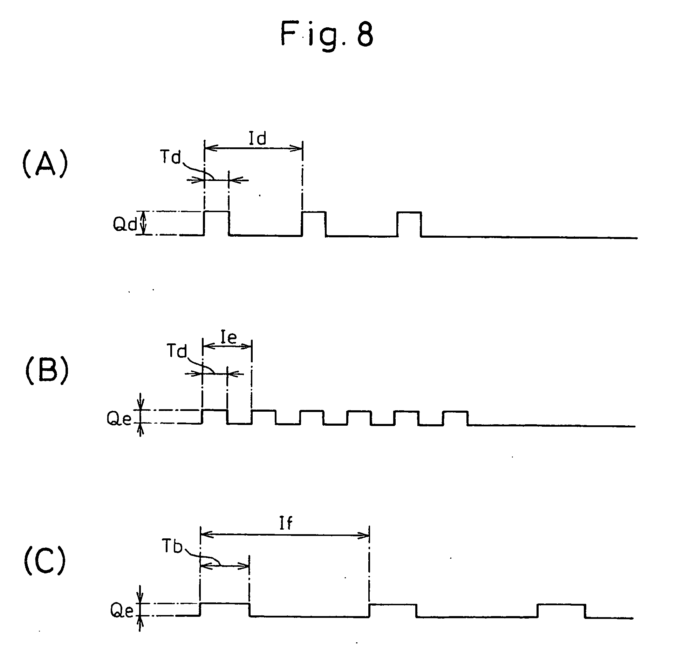

Next, the PM removal control of an exhaust purification system of a seventh embodiment will be explained. In the PM removal control of the seventh embodiment, when the amount of the particulate matter built up on the filter 12a has exceeded an allowable amount (that is, when the PM removal condition stands) and the SOx trap amount of the SOx trap 11 is smaller than the predetermined amount (that is, when the SOx release suppression condition does not stand), ordinary PM removal control is executed. In this ordinary PM removal control, as shown in FIG. 8(A), HC feed with an HC feed rate of a predetermined HC feed rate (hereinafter referred to as "ordinary HC feed rate") Qd and with an HC feed time of a predetermined HC feed time (hereinafter referred to as "ordinary HC feed time") Td is performed at a predetermined HC feed interval (hereinafter referred to as "ordinary HC feed interval") Id by a predetermined HC feed frequency (hereinafter referred to as "ordinary HC feed frequency", in the example shown in FIG. 8(A), three times).

Note that in the ordinary PM removal control of the seventh embodiment, the HC feed rate in each HC feed, the HC feed time in each HC feed, and the HC feed frequency are set so as to raise the temperature of the filter 12a to the PM combustion temperature and so that the total amount of HC fed to the filter 12a when all of the HC feed operations end becomes an HC amount sufficient for burning off exactly a predetermined amount of the particulate matter built up on the filter 12a (hereinafter referred to as "the predetermined HC amount"). Therefore, according to the ordinary PM removal control of the seventh embodiment, it is possible to burn off exactly a predetermined amount of the particulate matter built up on the filter 12a.

On the other hand, in the PM removal control of the seventh embodiment, when the PM removal condition stands and the SOx trap amount of the SOx trap 11 is larger than the predetermined amount (that is, when the SOx release suppression condition stands), SOx release suppression/PM removal control is executed. In this SOx release suppression/PM removal control, as shown in FIG. 8(B), HC feed with a HC feed rate of an HC feed rate Qe smaller than the ordinary HC feed rate Qd and with an HC feed time of a time Td equal to the ordinary HC feed time Td is performed at an interval Ie shorter than the ordinary HC feed interval Id by a frequency greater than the ordinary HC feed frequency. According to this, the amount of HC fed from the HC feed valve 14 into the exhaust gas in one HC feed is small, so the HC fed from the HC feed valve 14 easily diffuses in the exhaust gas. For this reason, the formation in the exhaust gas of a region where the air-fuel ratio becomes locally rich is suppressed, so the release of SOx from the SOx trap 11 is reliably suppressed.

Note that in the SOx release suppression/NOx release control of the seventh embodiment, as shown in FIG. 8(C), an HC feed with an HC feed rate of an HC feed rate Qe smaller than the ordinary HC feed rate Qd and with an HC feed time of a time Tf longer than the ordinary HC feed time may also be performed at an interval If longer than the ordinary HC feed interval Id by the same frequency as the ordinary HC feed frequency. According to this, the HC feed rate in each HC feed is small, so the HC fed from the HC feed valve 14 easily diffuses in the exhaust gas. For this reason, the formation in the exhaust gas of a region where the air-fuel ratio becomes locally rich is suppressed, so the release of SOx from the SOx trap 11 is reliably suppressed.

Note that in the SOx release suppression/PM removal control of the seventh embodiment, the HC feed rate in each HC feed, the HC feed time in each HC feed, the HC feed interval, and the HC feed frequency are set to at least enable the temperature of the filter 12a to be raised to the PM combustion temperature.

Further, in the SOx release suppression/PM removal control of the seventh embodiment as well, the HC feed rate in each HC feed, the HC feed time in each HC feed, and the HC feed frequency are preferably set so that the total amount of HC fed to the filter 12a when all of the HC feed operations end becomes the predetermined amount. Thus, in the example shown in FIG. 8(B), the HC feed rate is made the HC feed rate Qe of half of the ordinary HC feed rate Qd, the HC feed time is made a time Td equal to the ordinary HC feed time Td, and the HC feed frequency is made a frequency twice the ordinary HC feed frequency. Note that in the example shown in FIG. 8(Bs), the HC feed interval is made an interval Ie of half of the ordinary HC feed intervals Id.

Further, in the example shown in FIG. 8(C), the HC feed rate is made an HC feed rate Qe of half of the ordinary HC feed rate Qd, the HC feed time is made a time Tf of double the ordinary HC feed time Td, and the HC feed frequency is made a frequency equal to the ordinary HC feed frequency so that the total amount of HC fed to the filter 12a when all of the HC feed operations end becomes the predetermined amount. Note that in the example shown in FIG. 8(C), the HC feed interval is made an interval of about 1.5 times the ordinary HC feed interval.

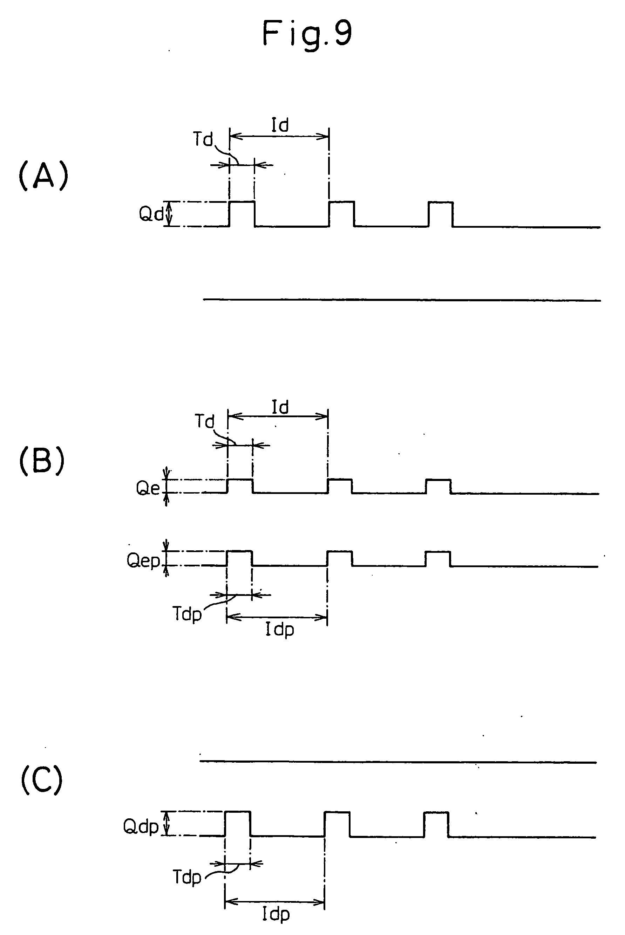

Next, the PM removal control of the exhaust purification system of an eighth embodiment will be explained with reference to FIG. 9. Note that in FIGS. 9(A) to (C), the upper line shows the feed of HC from the HC feed valve 14 into the exhaust gas, while the lower line shows the injection of fuel from the fuel injector 3 at a specific cylinder in the latter half of the expansion stroke or during the exhaust stroke.

In the PM removal control of the eighth embodiment, when the PM removal condition stands and the SOx release suppression condition does not stand, ordinary PM removal control is executed. In this ordinary PM removal control, as shown by the upper line of FIG. 9(A), an HC feed with a HC feed rate of an HC feed rate Qd equal to the ordinary HC feed rate Qd and with an HC feed time of a time Td equal to the ordinary HC feed time Td is performed at an interval Id equal to the ordinary HC feed interval Id by the same frequency as the ordinary frequency. Further, at this time, as shown by the lower line of FIG. 9(A), no cylinder is performing post fuel injection. Of course, in the ordinary PM removal control of the eighth embodiment as well, the HC feed rate in each HC feed, the HC feed time in each HC feed, and the HC feed frequency are set so as to raise the temperature of the filter 12a to the PM combustion temperature and so that the total amount of HC fed to the filter 12a when all of the HC feed operations end becomes the predetermined amount.

On the other hand, in the PM removal control of the eighth embodiment, when the PM removal condition stands and the SOx release suppression condition stands, SOx release suppression/PM removal control is executed. In this SOx release suppression/PM removal control, as shown by the upper line of FIG. 9(B), an HC feed with an HC feed rate of an HC feed rate Qe smaller than the ordinary HC feed rate Qd and with an HC feed time of a time Td equal to the ordinary feed time is performed at an interval Id equal to the ordinary HC feed interval Id by a frequency the same as the ordinary frequency and, as shown by the lower line of FIG. 9(B), post fuel injection with a post fuel injection rate of a post fuel injection rate Qep smaller than the ordinary HC feed rate Qd and with a post fuel injection time of a time Tdp equal to the ordinary HC feed time Td is performed at an interval Idp equal to the ordinary HC feed interval Id by a frequency the same as the ordinary HC feed frequency. According to this, the amount of HC fed into the exhaust gas from the HC feed valve 14 in one HC feed is small, so the HC fed from the HC feed valve 14 easily diffuses in the exhaust gas. For this reason, the HC fed from the HC feed valve 14 is kept from causing the formation of a region in the exhaust gas where the air-fuel ratio locally becomes very rich. Furthermore, the fuel injected from the fuel injector 3 at a specific cylinder in the latter half of the expansion stroke or during the exhaust stroke is modified by the heat in the cylinder and lightened. Further, this lightened fuel easily diffuses in the exhaust gas. For this reason, the fuel injected from the fuel injector 3 at a specific cylinder in the latter half of the expansion stroke or during the exhaust stroke is kept from causing the formation of a region in the exhaust gas where the air-fuel ratio locally becomes very rich. Therefore, the SOx trap 11 is reliably kept from releasing SOx.

Note that in the SOx release suppression/PM removal control of the eighth embodiment, as shown in FIG. 9(C), it is also possible to use just the post fuel injection to feed HC (fuel) into the filter 12a. That is, as shown by the lower line of FIG. 9(C), post fuel injection with a post fuel injection rate of a post fuel injection rate Qdp equal to the ordinary HC feed rate Qd and with a post fuel injection time of a time Tdp equal to the ordinary HC feed time Td may be performed at an interval Idp equal to the ordinary HC feed interval Id by a frequency equal to the ordinary HC feed frequency. Of course, at this time, as shown by the upper line of FIG. 9(C), the HC feed valve 14 does not feed HC into the exhaust gas. According to this, the fuel (HC) passing through the SOx trap 11 and fed to the filter 12a is lightened fuel, so easily diffuses in the exhaust gas. For this reason, formation of a region in the exhaust gas where the air-fuel ratio locally becomes very rich is suppressed, so the SOx trap 11 is reliably kept from releasing SOx.

Note that in the SOx release suppression/NOx release control of the eighth embodiment, the HC feed rate in each HC feed, the HC feed time in each HC feed, the HC feed interval, and the HC feed frequency are set so as to at least enable the temperature of the filter 12a to be raised to the PM combustion temperature.

Further, in the SOx release suppression/PM removal control of the eighth embodiment as well, the HC feed rate in each HC feed, the HC feed time in each HC feed, and the HC feed frequency and the post fuel injection rate in each post fuel injection, the post fuel injection time in each post fuel injection, and the post fuel injection frequency are preferably set so that the total amount of HC (fuel) fed to the filter 12a when all of the HC feed operations and all of the post fuel injections end becomes the predetermined HC (fuel). Thus, in the example shown in FIG. 9(B), the HC feed rate is made an HC feed rate Qe of half of the ordinary HC feed rate Qd, the HC feed time is made a time Td equal to the ordinary HC feed time Td, the HC feed frequency is made a frequency equal to the ordinary HC feed frequency, the post fuel injection rate is made a post fuel injection rate Qdp of half of the ordinary HC feed rate Qd, the post injection time is made a time Tdp equal to the ordinary HC feed time Td, and the post fuel injection frequency is made a frequency equal to the ordinary HC feed frequency. Note that in the example shown in FIG. 9(B), the HC feed interval and the post fuel injection intervals are both made intervals Id, Idp equal to the ordinary HC feed interval Id.

Further, in the example shown in FIG. 9(C), the post fuel injection rate is made a post fuel injection rate Tdp equal to the ordinary HC feed rate Qd, the post fuel injection time is made a time Tdp equal to the ordinary HC feed time Td, and the post fuel injection frequency is made a frequency equal to the ordinary HC feed frequency so that the total amount of HC (fuel) fed to the filter 12a when all of the HC feed operations and all of the post fuel injections end becomes the predetermined HC (fuel). Note that in the example shown in FIG. 9(C), the post fuel injection interval is made an interval Tdp equal to the ordinary HC feed interval Id.

Note that in the example shown in FIG. 9, the post fuel injection is shown executed at the same timing as the HC feed, but the post fuel injection timing is controlled based on the crank angle of the internal combustion engine, so strictly speaking, in most cases, the post fuel injection timing will not become the same timing as the HC feed timing, but will deviate from it somewhat. Further, in the example shown in FIG. 9, the post fuel injection interval was explained as equal to the ordinary HC feed interval, but for the same reason, strictly speaking, in most cases, the post fuel injection interval will not become equal to the ordinary HC feed interval, but will deviate from it somewhat.

Next, PM removal control of an exhaust purification system of a ninth embodiment will be explained. In the PM removal control of the ninth embodiment, when the PM removal condition stands and the SOx release suppression condition does not stand, the same control as the ordinary PM removal control of the seventh embodiment is executed.

On the other hand, in the PM removal control of the ninth embodiment, when the PM removal condition stands and the SOx release suppression condition stands, SOx release suppression/PM removal control is executed. In this SOx release suppression/PM removal control, in the same way as the ordinary NOx release control of the seventh embodiment, the ordinary HC feed rate, ordinary HC feed time, and ordinary HC feed interval are used for performing each HC feed by the ordinary HC feed frequency, but HC lightened by fractional distillation is prepared in advance and, in each HC feed, part of the HC fed from the HC feed valve 14 into the exhaust gas is made this lightened HC. In the above-mentioned way, the lightened HC easily diffuses in the exhaust gas. For this reason, the formation in the exhaust gas of a region where the air-fuel ratio becomes locally rich is suppressed, so the release of SOx from the SOx trap 11 is reliably suppressed.

Next, the PM removal control of the exhaust purification system of the 10th embodiment will be explained. In the PM removal control of the 10th embodiment, when the PM removal condition stands and the SOx release suppression condition does not stand, the same control as in the ordinary PM removal control of the seventh embodiment is executed.

On the other hand, in the PM removal control of the 10th embodiment, when the PM removal condition stands and the SOx release suppression condition stands, the SOx release suppression/PM removal control is executed. In this SOx release suppression/PM removal control, the HC feed rate in each HC feed, the HC feed time in each HC feed, and the HC feed interval are controlled so that the temperature of the SOx trap 11 is kept lower than the temperature where the HC in the exhaust gas ends up being burned all at once at the SOx trap 11. According to this, even when a region where the air-fuel ratio becomes locally rich is formed in the exhaust gas, the HC is kept from burning all at once at the SOx trap 11. For this reason, the temperature of the SOx trap 11 is kept from locally becoming higher than the SOx release temperature, so the SOx trap 11 is reliably kept from releasing SOx.

Note that in the SOx release suppression/PM removal control of the 10th embodiment, the HC feed rate in each HC feed, the HC feed time in each HC feed, the HC feed interval, and the HC feed frequency are set so as to at least enable the temperature of the filter 12a to be raised to the PM combustion temperature.

Further, in the SOx release suppression/PM removal control of the 10th embodiment as well, the HC feed rate in each HC feed, the HC feed time in each HC feed, and the HC feed frequency are preferably set so that the total amount of HC fed to the filter 12a becomes the predetermined amount when all of the HC feed operations end.

Next, the PM removal control of an exhaust purification system of the 11th 1embodiment will be explained. In the PM removal control of the 11th embodiment, when the PM removal condition stands and the SOx release suppression condition does not stand, control the same as the ordinary PM removal control of the seventh embodiment is executed.

On the other hand, in the PM removal control of the 11th embodiment, when the PM removal condition stands and the SOx release suppression condition stands, SOx release suppression/PM removal control is executed. In this SOx release suppression/PM removal control, the HC feed rate in each HC feed, the HC feed time in each HC feed, and the HC feed interval are controlled so that the temperature of the filter 12a is kept at a temperature as close as possible to the PM combustion temperature. According to this, the HC feed rate at one HC feed is set small, the HC feed time in one HC feed is set short, or the HC feed interval is set long. Therefore, the HC fed from the HC feed valve 14 easily diffuses in the exhaust gas. For this reason, the formation in the exhaust gas of a region where the air-fuel ratio becomes locally rich is suppressed, so the release of SOx from the SOx trap 11 is reliably suppressed.

Note that in the SOx release suppression/PM removal control of the 11th embodiment, the HC feed rate in each HC feed, the HC feed time in each HC feed, the HC feed interval, and the HC feed frequency are set so as to at least enable the temperature of the filter 12a to be raised to the PM combustion temperature.

Further, in the SOx release suppression/PM removal control of the 11th embodiment as well, the HC feed rate in each HC feed, the HC feed time in each HC feed, and the HC feed frequency are preferably set so that the total amount of HC fed to the filter 12a becomes the predetermined amount when all of the HC feed operations end. In this case, the time during which the SOx release suppression/PM removal control is executed becomes longer than the time during which ordinary PM removal control is executed.

Next, PM removal control of an exhaust purification system of a 12th embodiment will be explained. In the PM removal control of the 12th embodiment, when the PM removal condition stands and the SOx release suppression condition does not stand, the same control as the ordinary PM removal control of the seventh embodiment is executed.

On the other hand, in the PM removal control of the 12th embodiment, when the PM removal condition stands and the SOx release suppression condition stands, SOx release suppression/PM removal control is executed. In this SOx release suppression/PM removal control, the HC feed rate in each HC feed, the HC feed time in each HC feed, and the HC feed interval are controlled so that the width of the rise or fall of the temperature of the SOx trap 11 (hereinafter referred to as the "temperature amplitude") is kept smaller than the temperature amplitude of the SOx trap 11 allowed in ordinary PM removal control. According to this, compared with during execution of ordinary PM removal control, the HC feed rate in each HC feed is set smaller, the HC feed time in each HC feed is set shorter, or the HC feed interval is set longer. For this reason, the HC fed from the HC feed valve 14 easily diffuses in the exhaust gas. Therefore, the formation in the exhaust gas of a region where the air-fuel ratio becomes locally rich is suppressed, so the release of SOx from the SOx trap 11 is reliably suppressed.

Note that in the SOx release suppression/PM removal control of the 12th embodiment, the HC feed rate in each HC feed, the HC feed time in each HC feed, and the HC feed frequency are set to enable at least the temperature of the filter 12a to be raised to the PM combustion temperature.

Further, in the SOx release suppression/PM removal control of the 12th embodiment as well, the HC feed rate in each HC feed, the HC feed time in each HC feed, and the HC feed frequency are preferably set so that the total amount of HC fed to the filter 12a when all of the HC feeds end becomes a predetermined HC amount.

Next, the PM removal control of the exhaust purification system of the 13th embodiment will be explained. In the PM removal control of the 13th embodiment, when the PM removal condition stands and the SOx release suppression condition does not stand, the same control as the ordinary PM removal control of the seventh embodiment is executed.

On the other hand, in the PM removal control of the 13th embodiment, when the PM removal condition stands and the SOx release suppression condition stands, the SOx release suppression/PM removal control is executed. In this SOx release suppression/PM removal control, the HC feed rate in each HC feed, the HC feed time in each HC feed, and the HC feed interval are controlled so that the lean degree of the air-fuel ratio of the exhaust gas fed to the filter 12a is kept larger than the target lean degree in the ordinary PM removal control. That is, when the lean degree of the air-fuel ratio of the exhaust gas flowing into the filter 12a is small, the lean degree of air-fuel ratio of the exhaust gas flowing into the SOx trap 11 also becomes small. Further, in this case, a region in the exhaust gas flowing into the SOx trap 11 where the air-fuel ratio locally becomes rich may be formed. However, according to the SOx release suppression/PM removal control of the 13th embodiment, the formation of a region in the exhaust gas flowing into the SOx trap 11 where the air-fuel ratio becomes locally rich is suppressed, so the release of SOx from the SOx trap 11 is reliably suppressed.

Note that in the SOx release suppression/PM removal control of the 13th embodiment, the HC feed rate in each HC feed, the HC feed time in each HC feed, and the HC feed frequency are set to enable at least the temperature of the filter 12a to be raised to the PM combustion temperature.

Further, in the SOx release suppression/PM removal control of the 13th embodiment as well, the HC feed rate in each HC feed, the HC feed time in each HC feed, and the HC feed frequency are preferably set so that the total amount of HC fed to the filter 12a when all of the HC feeds end becomes a predetermined HC amount.

Further, in the SOx release suppression/PM removal control of the 13th embodiment, the lean degree of the air-fuel ratio of the exhaust gas fed to the filter 12a is, for example, estimated from the output of the air-fuel ratio sensor attached to exhaust pipe downstream of the filter 12a.

Next, the PM removal control of an exhaust purification system of the 14th embodiment will be explained. In the PM removal control of the 14th embodiment, when the PM removal condition stands and the SOx release suppression condition does not stand, control the same as the ordinary PM removal control of the seventh embodiment is executed.

On the other hand, in the PM removal control of the 14th embodiment, when the PM removal condition stands and the SOx release suppression condition stands, SOx release suppression/PM removal control is executed. In this SOx release suppression/PM removal control, the HC feed rate in each HC feed, the HC feed time in each HC feed, and the HC feed interval are controlled so that the temperature elevation rate when the filter 12a is raised in temperature is kept smaller than the target temperature elevation rate in ordinary PM removal control. According to this, the HC feed rate in one HC feed is set smaller, the HC feed time in one HC feed is set shorter, or the HC feed interval is set longer. For this reason, the HC fed from the HC feed valve 14 easily diffuses in the exhaust gas. For this reason, the formation in the exhaust gas of a region where the air-fuel ratio becomes locally rich is suppressed, so the release of SOx from the SOx trap 11 is reliably suppressed.

Note that in the SOx release suppression/PM removal control of the 14th embodiment, the HC feed rate in each HC feed, the HC feed time in each HC feed, the HC feed interval, and the HC feed frequency are set so as to at least enable the temperature of the filter 12a to be raised to the PM combustion temperature.

Further, in the SOx release suppression/PM removal control of the 14th embodiment as well, the HC feed rate in each HC feed, the HC feed time in each HC feed, and the HC feed frequency are preferably set so that the total amount of HC fed to the filter 12a when all of the HC feed operations end becomes the predetermined amount.

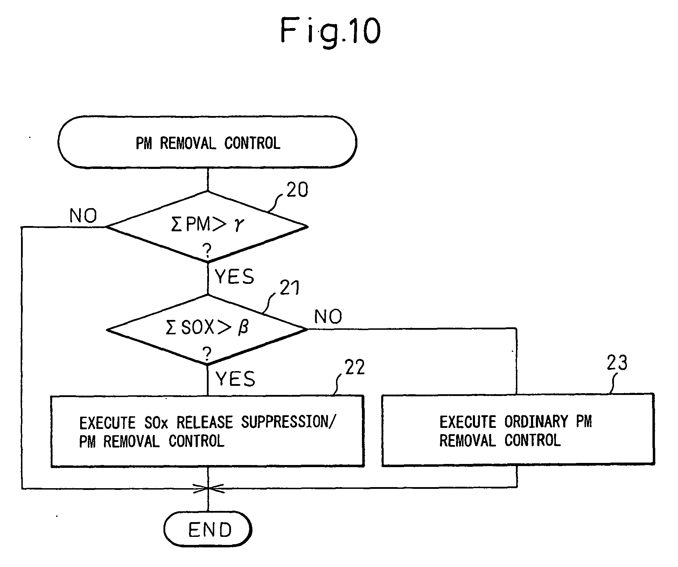

FIG. 10 shows an example of a routine for executing the PM removal control of an embodiment of the present invention. In the routine of FIG. 10, first, at step 20, it is judged if the amount ∑PM of particulate matter deposited on the filter 12a is greater than an allowable value γ (∑PM>γ) (that is, if the PM removal condition stands). Here, when it is judged that ∑PM≤γ, the routine is ended as is. On the other hand, when it is judged that ∑PM>γ, the routine proceeds to step 21 where it is judged if the SOx trap amount ∑SOX of the SOx trap 11 is greater than a predetermined amount β (∑SOX>β) (that is, whether the SOx release suppression condition stands).

When it is judged at step 21 that ∑SOX>β, the routine proceeds to step 22 where the SOx release suppression/PM removal control of one of the above-mentioned seventh embodiment to the 14th embodiment is executed. On the other hand, when it is judged at step 21 that ∑SOX≤β, the routine proceeds to step 23 where the SOx release suppression/PM removal control of one of the above-mentioned seventh embodiment to the 14th embodiment is executed.

However, when trying to make the NOx absorbent 47 release NOx and the temperature of the SOx trap 11 becomes higher than the SOx release temperature, if feeding HC from the HC feed valve 14 into the exhaust gas so as to make the NOx absorbent 47 release NOx, the SOx trap 11 ends up releasing SOx. Thus, as NOx release control of an exhaust purification system of the 15th embodiment, when trying to make the NOx absorbent 47 release NOx (that is, when the NOx release condition stands), it is possible to prohibit the feed of HC from the HC feed valve 14 into the exhaust gas (that is, the execution of NOx release control in the above-mentioned embodiment) if the temperature of the SOx trap 11 becomes higher than the SOx release temperature. According to this, the SOx trap 11 is reliably kept from releasing SOx.

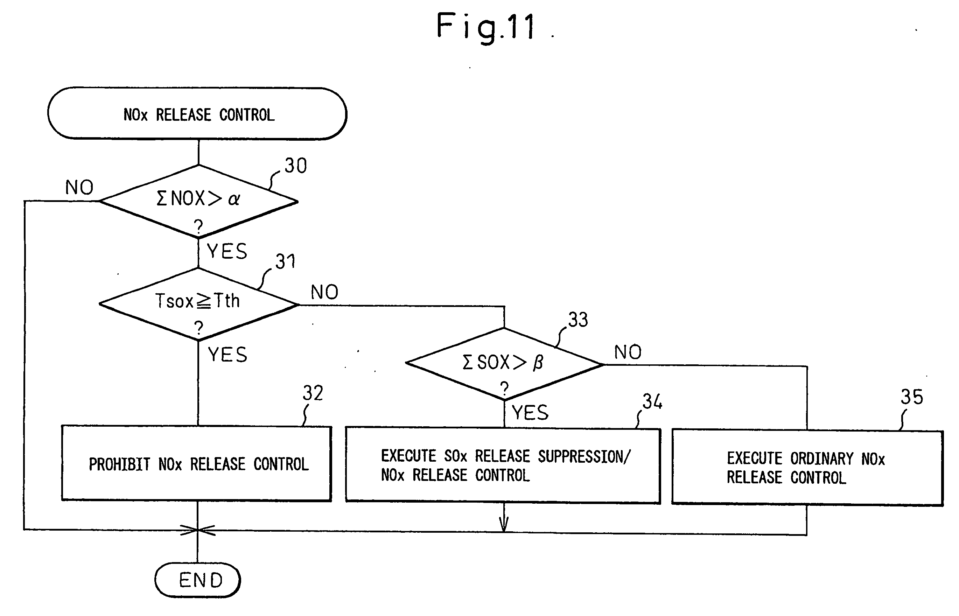

FIG. 11 shows an example of a routine executing NOx release control of a 15th embodiment. In the routine of FIG. 11, first, at step 30, it is judged if the NOx amount ∑NOX absorbed in the NOx absorbent 47 is greater than an allowable value α (∑NOX>α) (that is, whether the NOx release condition stands). Here, when it is judged that ∑NOX≤α, the routine is ended as is. On the other hand, when it is judged that ∑NOX>α, the routine proceeds to step 31 where it is judged if the temperature Tsox of the SOx trap 11 is the SOx release temperature Tth or more (Tsox≥Tth).

When it is judged at step 31 that Tsox≥Tth, the routine proceeds to step 32 where execution of NOx release control is prohibited. That is, in this case, the NOx release control is not executed. On the other hand, when it is judged at step 31 that Tsox<Tth, the routine proceeds to step 33, where it is judged if the SOx trap amount ∑SOX of the SOx trap 11 is greater than a predetermined amount β (∑SOX>β) (that is, whether the SOx release suppression condition stands).

When it is judged at step 33 that ∑SOX>β, the routine proceeds to step 34, where SOx release suppression/NOx release control of one of the above-mentioned first embodiment to sixth embodiment is executed. On the other hand, when it is judged at step 33 that ∑SOX≤β, the routine proceeds to step 35 where one of the ordinary NOx release control of the above-mentioned first embodiment to sixth embodiment is executed.

However, as the PM removal control of the exhaust purification system of the 16th embodiment, the following control may also be employed. That is, as explained above, during execution of PM removal control, the temperature of the SOx trap 11 becomes relatively high, but here when the temperature of the SOx trap 11 is higher than the SOx release temperature, compared with when the temperature of the SOx trap 11 is lower than the SOx release temperature, the formation in the exhaust gas of a region where the air-fuel ratio locally becomes rich should be reliably suppressed. Thus, in the PM removal control of the 16th embodiment, when the PM removal condition stands and the SOx release suppression condition does not stand, one of the SOx release suppression/PM removal control of the above-mentioned seventh embodiment to 14th embodiment is executed.

On the other hand, in the PM removal control of the 16th embodiment, when the PM removal condition stands and the SOx release suppression condition stands, it is judged that the temperature of the SOx trap 11 is higher than the SOx release temperature. Here, when the temperature of the SOx trap 11 is lower than the SOx release temperature, either of the SOx release suppression/PM removal control of the above-mentioned seventh embodiment to the 14th embodiment is executed. On the other hand, when the temperature of the SOx trap 11 is higher than the SOx release temperature, similar control as the SOx release suppression/PM removal control performed when the temperature of the SOx trap 11 is lower than the SOx release temperature is executed, but the HC feed rate at this time is made smaller than the HC feed rate in the SOx release suppression/PM removal control performed when the temperature of the SOx trap 11 is lower than the SOx release temperature. According to this, the amount of HC fed from the HC feed valve 14 in one HC feed is small, so the HC fed from the HC feed valve 14 easily diffuses in the exhaust gas. For this reason, the formation in the exhaust gas of a region where the air-fuel ratio becomes locally rich is suppressed, so the release of SOx from the SOx trap 11 is suppressed.

Alternatively, in the above-mentioned PM removal control of the 16th embodiment, when the PM removal condition stands and the SOx release suppression condition stands, the HC feed rate in each HC feed, the HC feed time in each HC feed, and the HC feed interval may be controlled so that the width of the rise or fall of the temperature of the SOx trap 11 (temperature amplitude) when the temperature of the SOx trap 11 is higher than the SOx release temperature is kept smaller than the temperature amplitude of the SOx trap 11 allowed in the SOx release/PM removal control performed when the temperature of the SOx trap 11 is lower than the SOx release temperature. According to this, compared with execution of the SOx release suppression/PM removal control performed when the temperature of the SOx trap 11 is lower than the SOx release temperature, the HC feed rate in each HC feed is set smaller, the HC feed time in each HC feed is set shorter, or the HC feed interval is set longer. For this reason, the HC fed from the HC feed valve 14 easily diffuses in the exhaust gas. Therefore, the formation in the exhaust gas of a region where the air-fuel ratio becomes locally rich is suppressed, so the release of SOx from the SOx trap 11 is reliably suppressed.

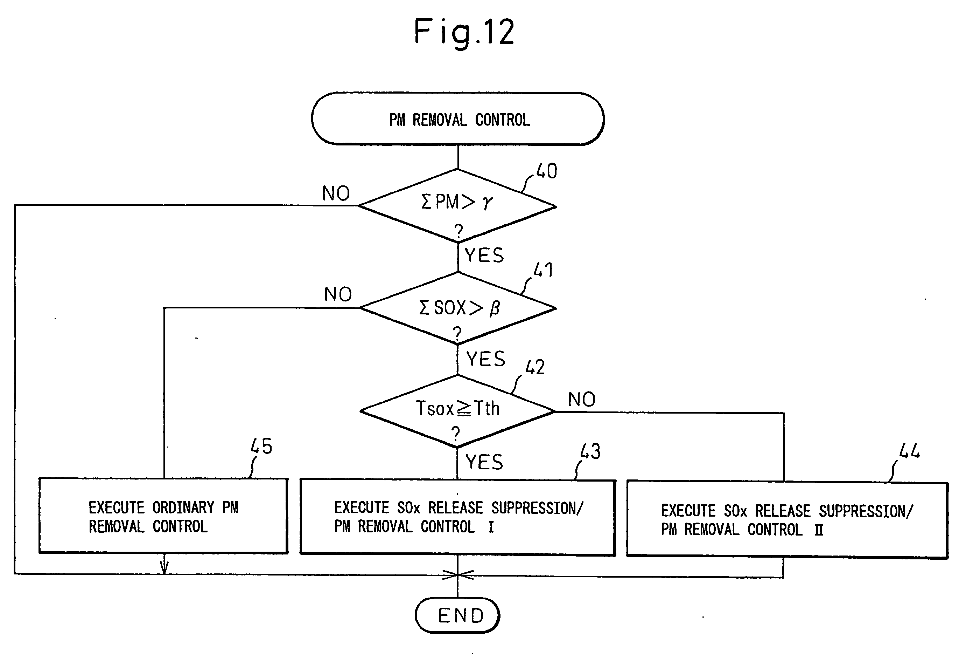

FIG. 12 shows an example of the routine executing the PM removal control of the 16th embodiment. In the routine of FIG. 12, first, at step 40, it is judged if the amount ∑PM of the particulate matter deposited on the filter 12a is greater than an allowable value γ (∑PM>γ) (that is, whether the PM removal condition stands). Here, when it is judged that EPM≤γ, the routine is ended as is. On the other hand, when it is judged that ∑PM>γ, the routine proceeds to step 41 where it is judged if the SOx trap amount ∑SOX of the SOx trap 11 is greater than a predetermined amount β (∑SOX>β) (that is, whether the SOx release suppression condition stands).

When it is judged at step 41 that ∑SOX≤β, the routine proceeds to step 45 where one of the ordinary PM removal control of the seventh embodiment to 14th embodiment is executed. On the other hand, when it is judged at step 41 that ∑SOX>β, the routine proceeds to step 42 where it is judged if the temperature Tsox of the SOx trap 11 is the SOx release temperature Tth or more (Tsox≥Tth).

When it is judged at step 42 that Tsox<Tth, the routine proceeds to step 44 where SOx release suppression/PM removal control II is executed. In this SOx release suppression/PM removal control II, one of the SOx release suppression/PM removal control of the seventh embodiment to the 14th embodiment is executed. On the other hand, when it is judged at step 42 that Tsox≥Tth, the routine proceeds to step 45 where SOx release suppression/PM removal control I is executed. In this SOx release suppression/PM removal control I, control similar to the SOx release suppression/PM removal control II of step 44 is executed, but here the HC feed rate is made smaller than the HC feed rate at the SOx release suppression/PM removal control II of step 44.

In this regard, it is also possible to employ the following control as NOx release control of an exhaust purification system of a 17th embodiment. That is, in the NOx release control of the 17th embodiment, when the lean degree of the air-fuel ratio of the exhaust gas exhausted from each cylinder is larger than a predetermined lean degree (hereinafter referred to as "the predetermined lean degree"), one of the ordinary NOx release control of the first embodiment to sixth embodiment is executed when the NOx release condition stands. On the other hand, when the lean degree of the air-fuel ratio of the exhaust gas exhausted from each cylinder is smaller than the predetermined lean degree, one of the SOx release suppression/NOx release control of the first embodiment to sixth embodiment is executed when the NOx release condition stands. According to this, the SOx trap 11 is reliably kept from releasing SOx.

That is, when the lean degree of the air-fuel ratio of the exhaust gas exhausted from each cylinder is smaller than the predetermined lean degree, the air-fuel ratio of the exhaust gas becomes close to a rich air-fuel ratio. At this time, if NOx release control is executed, there is a high possibility that a region in the exhaust gas flowing into the SOx trap 11 where the air-fuel ratio locally becomes very rich will be formed. Therefore, there is a high possibility that the temperature of the SOx trap 11 will locally become higher than the SOx release temperature. Therefore, when executing NOx release control, if the lean degree of the air-fuel ratio of the exhaust gas exhausted from each cylinder is smaller than the predetermined lean degree, to reliably keep the SOx trap 11 from releasing SOx, formation of a region in the exhaust gas where the air-fuel ratio locally becomes very rich is suppressed. Therefore, it is necessary to keep the temperature of the SOx trap 11 from locally becoming higher than the SOx release temperature. Thus, in the NOx release control of the 17th embodiment, when the lean degree of the air-fuel ratio of the exhaust gas exhausted from each cylinder is smaller than the predetermined lean degree, one of the SOx release suppression/NOx release control of the first embodiment to sixth embodiment is executed.

In this regard, as the PM removal control of the exhaust purification system of the 18th embodiment, the following control may be employed. That is, in the PM removal control of the 18th embodiment, when the lean degree of the air-fuel ratio of the exhaust gas exhausted from each cylinder is larger than a predetermined lean degree (hereinafter referred to as "the predetermined lean degree"), one of the ordinary PM removal control of the seventh embodiment to 14th embodiment is executed when the PM removal condition stands. On the other hand, when the lean degree of the air-fuel ratio of the exhaust gas exhausted from each cylinder is smaller than the predetermined lean degree, one of the SOx release suppression/PM removal control of the seventh embodiment to the 14th embodiment is executed when the PM removal condition stands. According to this, the SOx trap 11 is reliably kept from releasing SOx.

That is, when the lean degree of the air-fuel ratio of the exhaust gas exhausted from each cylinder is smaller than the predetermined lean degree, the air-fuel ratio of the exhaust gas becomes close to a rich air-fuel ratio. At this time, if PM removal control is executed, there is a high possibility that a region in the exhaust gas flowing into the SOx trap 11 where the air-fuel ratio locally becomes very rich will be formed. Therefore, when executing PM removal control, if the lean degree of the air-fuel ratio of the exhaust gas exhausted from each cylinder is smaller than the predetermined lean degree, to reliably keep the SOx trap 11 from releasing SOx, formation of a region in the exhaust gas where the air-fuel ratio locally becomes very rich has to be suppressed. Therefore, in the PM removal control of the 18th embodiment, when the lean degree of the air-fuel ratio of the exhaust gas exhausted from each cylinder is smaller than the predetermined lean degree, one of the SOx release suppression/NOx release control of the seven embodiment to 14th embodiment is executed.

Note that in the PM removal control of the 18th embodiment, it is also possible to prohibit execution of the PM removal control when the lean degree of the air-fuel ratio of the exhaust gas exhausted from each cylinder is smaller than the predetermined lean degree. This also enables the SOx trap 11 to be reliably kept from releasing SOx.

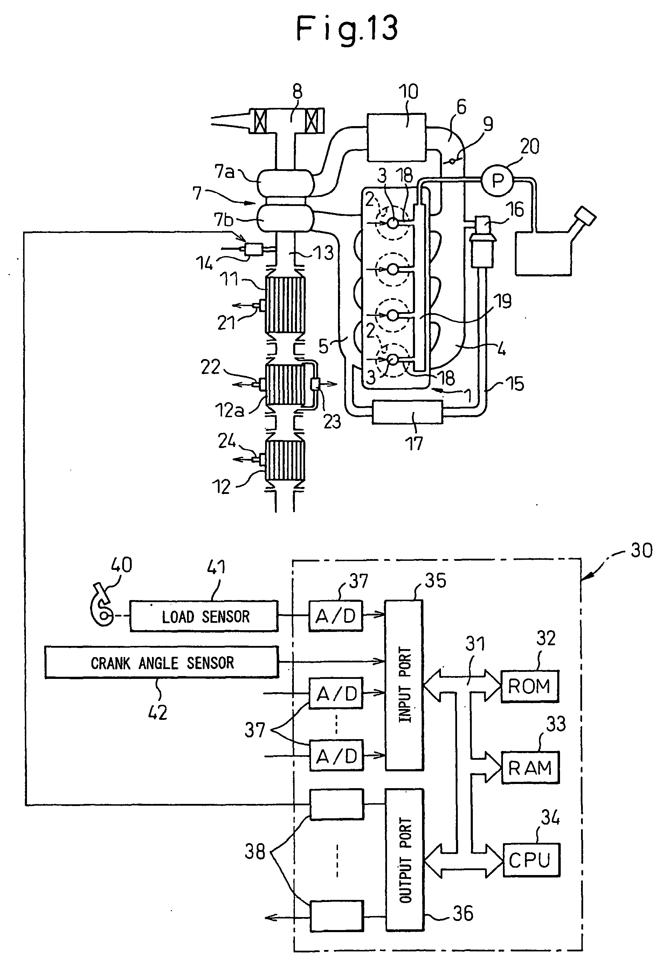

Further, the NOx release control and PM removal control of the above-mentioned embodiments can also be applied to the compression ignition type of internal combustion engine shown in FIG. 13. The internal combustion engine shown in FIG. 13 is similar to the internal combustion engine shown in FIG. 1, but in the internal combustion engine shown in FIG. 13, instead of the NOx catalyst 12 carried on the filter 12a, a particulate filter 12a for trapping particulate matter is arranged downstream of the SOx trap 11 and an NOx catalyst 12 is arranged downstream of the particulate filter 12a. Further, in the internal combustion engine shown in FIG. 13, when trying to make the NOx absorbent of the NOx catalyst 12 release NOx, the NOx release control of the above-mentioned embodiments is adopted. Further, in the internal combustion engine shown in FIG. 13, when trying to burn off the particulate matter built up on the particulate filter 12a, the PM removal control of above-mentioned embodiments is employed.

Note that in the internal combustion engine shown in FIG. 13, the particulate filter 12a is provided with a temperature sensor 22 for detecting the temperature of the particulate filter 12a and a differential pressure sensor 23 for detecting the differential pressure before and after the particulate filter 12a. Further, the NOx catalyst 12 is provided with a temperature sensor 24 for detecting the temperature of the NOx catalyst 12.

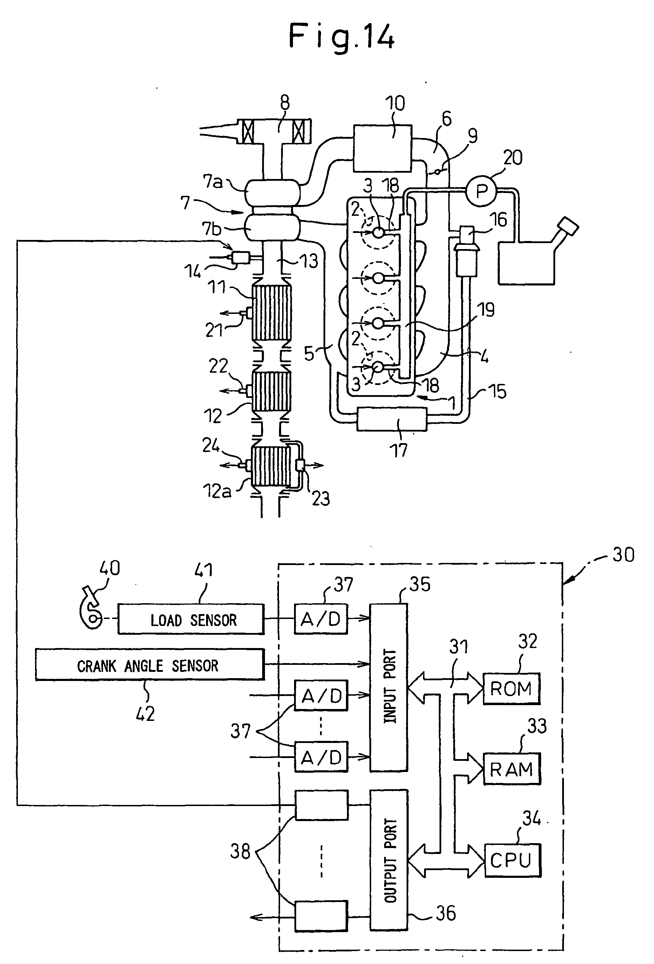

Further, the NOx release control and PM removal control of the above-mentioned embodiments may also be applied to the compression ignition type of internal combustion engine shown in FIG. 14. The internal combustion engine shown in FIG. 14 is similar to the internal combustion engine shown in FIG. 1, but in the internal combustion engine shown in FIG. 14, downstream of the SOx trap 11, instead of the NOx catalyst 12 carried on the filter 12a, an NOx catalyst 12 is arranged and, downstream of the NOx catalyst 12, just a particulate filter 12a for trapping particulate matter is arranged. Further, in the internal combustion engine shown in FIG. 14, when trying to make the NOx absorbent of the NOx catalyst 12 release NOx, the NOx release control of the above-mentioned embodiments is employed. Further, in the internal combustion engine shown in FIG. 14, when trying to burn off the particulate matter built up on the particulate filter 12a, the PM removal control of the above-mentioned embodiments is employed.

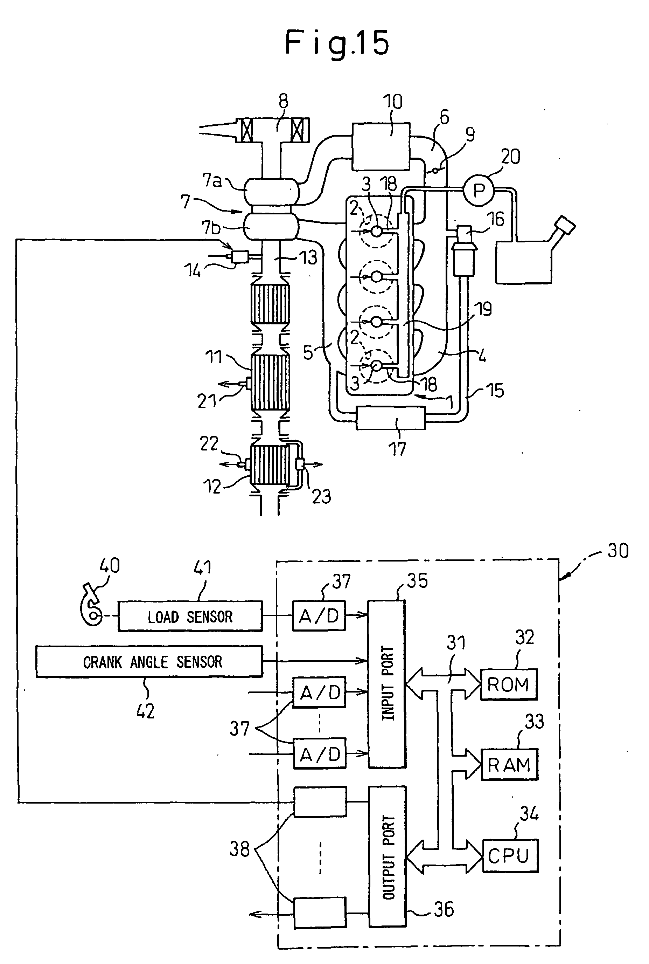

Further, in the internal combustion engine shown in FIG. 1, as shown in FIG. 15, it is also possible to arrange upstream of the SOx trap 11 an oxidation catalyst 26 oxidizing the HC fed from the HC feed valve 14 into the exhaust gas and provided with an oxidizing ability higher than the oxidizing ability of the SOx trap 11. In this case, the HC fed from the HC feed valve 14 into the exhaust gas is oxidized by the oxidation catalyst 26, so formation of a region in the exhaust gas where the air-fuel ratio locally becomes rich is reliably suppressed.

Further, in the exhaust purification system of the above-mentioned embodiment, the HC feed valve 14 is provided with a heater for heating the HC feed valve 14. In ordinary NOx release control or ordinary PM removal control, when the HC feed valve 14 feeds HC into the exhaust gas, the HC feed valve 14 is not heated by the heater, but in SOx release suppression/NOx release control or SOx release suppression/PM removal control, when the HC feed valve 14 feeds HC into the exhaust gas, the HC feed valve 14 may be heated by the heater. According to this, in SOx release suppression/NOx release control or SOx release suppression/PM removal control, HC fed from the HC feed valve 14 easily diffuses in the exhaust gas, so SOx is kept from being released from the SOx trap 11.

Further, in the SOx release suppression/NOx release control or SOx release suppression/PM removal control of the above-mentioned embodiments, the pressure for feeding HC from the HC feed valve 14 into the exhaust gas may be made higher than the pressure for feeding HC from the HC feed valve 14 into the exhaust gas in ordinary NOx release control or ordinary PM removal control. Due to this as well, in SOx release suppression/NOx release control or SOx release suppression/PM removal control, the HC fed from the HC feed valve 14 becomes able to easily diffuse in the exhaust gas, so SOx is kept from being released from the SOx trap 11.

Further, in the exhaust purification system of the above-mentioned embodiment, as the HC feed valve 14, an HC feed valve provided with a plurality of feed ports for feeding HC and enabling the number of feed ports feeding HC to be suitably changed is employed. In the SOx release suppression/NOx release control or SOx release suppression/PM removal control, when the HC feed valve feeds HC into the exhaust gas, the number of feed ports for feeding HC may be made greater than the number of feed ports feeding HC in ordinary NOx release control or ordinary PM removal control. Due to this as well, in SOx release suppression/NOx release control or SOx release suppression/PM removal control, the HC fed from the HC feed valve 14 becomes able to easily diffuse in the exhaust gas, so SOx is kept from being released from the SOx trap 11.

Further, several of the NOx release control methods of the plurality of the above-mentioned embodiments may be combined within a range not giving rise to any contradictions, while several of the PM removal control methods of the plurality of the above-mentioned embodiments may be combined within a range not giving rise to any contradictions.

Further, the NOx release control or PM removal control of the embodiments other than the above-mentioned second embodiment, third embodiment, eighth embodiment, and ninth embodiment can be applied not only to an internal combustion engine feeding HC from the HC feed valve 14 into the exhaust gas, but also to an internal combustion engine injecting fuel from a fuel injector 3 in a latter half of an expansion stroke or during an exhaust stroke of a specific cylinder.

Note that the present invention was explained based on specific embodiments, but a person skilled in the art could make various changes, modifications, etc. without departing from the claims and idea of the present invention.

### DESCRIPTION OF REFERENCES

- 11.: SOx trap
- 12.: NOx catalyst
- 12a.: Particulate filter
- 14.: HC feed valve

## Claims

1. An exhaust purification system of an internal combustion engine providing an SOx trap (11) for trapping the SOx in the exhaust gas inside an exhaust passage, said SOx trap (11) trapping the SOx in the exhaust gas when an air-fuel ratio of the exhaust gas flowing into said SOx trap (11) is an air-fuel ratio leaner than a stoichiometric air-fuel ratio and a temperature of said SOx trap (11) is lower than a predetermined temperature and releasing the trapped SOx when the air-fuel ratio of the exhaust gas flowing into said SOx trap (11) is the stoichiometric air-fuel ratio or an air-fuel ratio richer than that and the temperature of said SOx trap (11) is higher than said predetermined temperature and executing HC feed control feeding HC into the exhaust gas upstream of the SOx trap (11) when a predetermined condition stands, said exhaust purification system of an internal combustion engine executes, as said HC feed control, first HC feed control feeding HC into the exhaust gas upstream of the SOx trap (11) by a predetermined pattern when the amount of SOx which the SOx trap (11) traps is smaller than a predetermined amount and executes, as said HC feed control, second HC feed control feeding HC into the exhaust gas upstream of the SOx trap (11) by a pattern different from said predetermined pattern, which pattern keeping the temperature of the SOx trap (11) from locally becoming higher than said predetermined temperature or suppressing the formation of a region in the exhaust gas flowing into the SOx trap (11) where the air-fuel ratio becomes locally rich, when the amount of SOx which the SOx trap (11) traps is larger than said predetermined amount.

2. An exhaust purification system of an internal combustion engine as set forth in claim 1, wherein, in said first HC feed control, a predetermined amount of HC is fed into the exhaust gas upstream of the SOx trap (11) per unit time, while in said second HC feed control, an amount of HC smaller than said predetermined amount is fed into the exhaust gas upstream of the SOx trap (11) per unit time.

3. An exhaust purification system of an internal combustion engine as set forth in claim 1, wherein, in said second HC feed control, HC with a higher diffusion ability into the exhaust gas than the HC fed into the exhaust gas upstream of the SOx trap (11) in said first HC feed control is fed into the exhaust gas upstream of the SOx trap (11).

4. An exhaust purification system of an internal combustion engine as set forth in claim 2, wherein, in said second HC feed control, HC is fed into the exhaust gas upstream of the SOx trap (11) so that a lean degree of the air-fuel ratio of the exhaust gas flowing into the SOx trap (11) is kept larger than a predetermined lean degree.

5. An exhaust purification system of an internal combustion engine as set forth in claim 3, wherein, in said second HC feed control, HC is fed into the exhaust gas upstream of the SOx trap (11) so that a lean degree of the air-fuel ratio of the exhaust gas flowing into the SOx trap (11) is kept larger than a predetermined lean degree.

6. An exhaust purification system of an internal combustion engine as set forth in claim 4, wherein said predetermined lean degree is set larger the lower the temperature of the SOx trap (11).

7. An exhaust purification system of an internal combustion engine as set forth in claim 5, wherein said predetermined lean degree is set larger the lower the temperature of the SOx trap (11).

8. An exhaust purification system of an internal combustion engine as set forth in claim 1, wherein, in said second HC feed control, HC is fed into the exhaust gas upstream of the SOx trap (11) so that the amount of local temperature rise of the SOx trap (11) per unit time is kept smaller than the amount of local temperature rise of the SOx trap (11) per unit time allowed in said first HC feed control.

9. An exhaust purification system of an internal combustion engine as set forth in claim 8, wherein, in said second HC feed control, HC is fed into the exhaust gas upstream of the SOx trap (11) so that an amount of temperature rise of the SOx trap (11) as a whole per unit time is kept smaller than an amount of temperature rise of the SOx trap (11) as a whole per unit time allowed in said first HC feed control.

10. An exhaust purification system of an internal combustion engine as set forth in claim 8, wherein a particulate filter (12a) trapping particulate matter in the exhaust gas is arranged in the exhaust passage downstream of said SOx trap (11) one said predetermined condition is a burnaway condition where it is judged if the temperature of said particulate filter (12a) should be raised to a predetermined target temperature to burn away particulate matter trapped by the particulate filter (12a), and, when said second HC feed control is executed when said burnaway condition stands, in said second HC feed control, HC is fed into the exhaust gas upstream of the SOx trap (11) using as a target temperature a temperature lower than said target temperature in said first HC feed control in the case where said first HC feed control is executed when said burnaway condition stands.

11. An exhaust purification system of an internal combustion engine as set forth in claim 9, wherein, in said second HC feed control, HC is fed into the exhaust gas upstream of the SOx trap (11) so that a temperature amplitude of the SOx is kept smaller than a temperature amplitude of the SOx trap (11) allowed in said first HC feed control.

12. An exhaust purification system of an internal combustion engine as set forth in claim 10, wherein, in said second HC feed control, HC is fed into the exhaust gas upstream of the SOx trap (11) so that a temperature amplitude of the SOx is kept smaller than a temperature amplitude of the SOx trap (11) allowed in said first HC feed control.

13. An exhaust purification system of an internal combustion engine as set forth in claim 8, wherein, an NOx absorbent (47) absorbing the NOx in the exhaust gas is arranged in the exhaust passage downstream of said SOx trap (11), one said predetermined condition is an NOx release condition where it is judged that said NOx absorbent (47) should release NOx, and, when said second HC feed control is executed when said NOx release condition stands, in said second HC feed control, HC is fed into the exhaust gas upstream of the SOx trap (11) so that a temperature amplitude of the SOx trap (11) is kept smaller than a temperature amplitude of the SOx trap (11) allowed in said first HC feed control in the case where said first HC feed control is executed when said NOx release condition stands.

14. An exhaust purification system of an internal combustion engine as set forth in claim 1, wherein an oxidation catalyst (26) provided with an oxidizing ability higher than even the oxidizing ability of said SOx trap (11) is arranged in the exhaust passage upstream of said SOx trap (11).

## Patentansprüche

1. Abgasreinigungssystem für einen Verbrennungsmotor, das einen SOₓ-Abscheider (11) zum Abscheiden des SOₓ in dem Abgas im Inneren einer Abgasleitung bereitstellt, wobei der SOₓ-Abscheider (11) das SOₓ in dem Abgas abscheidet, wenn ein Kraftstoff-Luft-Verhältnis des in den SOₓ-Abscheider (11) strömenden Abgases einem Kraftstoff-Luft-Verhältnis entspricht, das magerer ist als ein stöchiometrisches Kraftstoff-Luft-Verhältnis, und eine Temperatur des SOₓ-Abscheiders (11) niedriger als eine vorbestimmte Temperatur ist, und das abgeschiedene SOₓ freisetzt, wenn das Kraftstoff-Luft-Verhältnis des in den SOₓ-Abscheider (11) strömenden Abgases dem stöchiometrischen Kraftstoff-Luft-Verhältnis oder einem Kraftstoff-Luft-Verhältnis entspricht, das fetter als selbiges ist, und die Temperatur des SOₓ-Abscheiders (11) höher als die vorbestimmte Temperatur ist, und das eine Kohlenwasserstoffzuführsteuerung ausführt, bei der ein Kohlenwasserstoff in das Abgas stromauf des SOₓ-Abscheiders (11) eingeführt wird, wenn eine vorbestimmte Bedingung steht, wobei das Abgasreinigungssystem für einen Verbrennungsmotor, als die Kohlenwasserstoffzuführsteuerung, eine erste Kohlenwasserstoffsteuerung ausführt, bei der der Kohlenwasserstoff in das Abgas stromauf des SOₓ-Abscheiders (11) nach einem vorbestimmten Muster zugeführt wird, wenn die SOₓ-Menge, die durch den SOₓ-Abscheider (11) abgeschieden wird, geringer als eine vorbestimmte Menge ist, und, als die Kohlenwasserstoffzuführsteuerung, eine zweite Kohlenwasserstoffzuführsteuerung ausführt, bei der der Kohlenwasserstoff in das Abgas stromauf des SOₓ-Abscheiders (11) nach einem Muster zugeführt wird, das sich von dem vorbestimmten Muster unterscheidet, wobei das Muster verhindert, dass die Temperatur des SOₓ-Abscheiders (11) lokal auf einen höheren Wert als die vorbestimmte Temperatur ansteigt, oder die Bildung eines Bereichs in dem in den SOₓ-Abscheider (11) strömenden Abgases verhindert, in dem das Kraftstoff-Luft-Verhältnis lokal einen fetten Wert erreicht, wenn die SOₓ-Menge, die durch den SOₓ-Abscheider (11) abgeschieden wird, die vorbestimmte Menge überschreitet.

2. Abgasreinigungssystem für einen Verbrennungsmotor nach Anspruch 1, wobei, in der ersten Kohlenwasserstoffzuführsteuerung, eine vorbestimmte Kohlenwasserstoffmenge in das Abgas stromauf des SOₓ-Abscheiders (11) pro Zeiteinheit eingeführt wird, während in der zweiten Kohlenwasserstoffzuführsteuerung eine Kohlenwasserstoffmenge, die kleiner als die vorbestimmte Menge ist, in das Abgas stromauf des SOₓ-Abscheiders (11) pro Zeiteinheit eingeführt wird.

3. Abgasreinigungssystem für einen Verbrennungsmotor nach Anspruch 1, wobei, in der zweite Kohlenwasserstoffzuführsteuerung, der Kohlenwasserstoff mit einer höheren Diffusionsfähigkeit im Abgas als der Kohlenwasserstoff, der in das Abgas stromauf des SOₓ-Abscheiders (11) in der ersten Kohlenwasserstoffzuführsteuerung eingeführt wird, in das Abgas stromauf des SOₓ-Abscheiders (11) eingeführt wird.

4. Abgasreinigungssystem für einen Verbrennungsmotor nach Anspruch 2, wobei, in der zweiten Kohlenwasserstoffzuführsteuerung, der Kohlenwasserstoff in das Abgas stromauf des SOₓ-Abscheiders (11) eingeführt wird, so dass ein Mageranteil des Kraftstoff-Luft-Verhältnisses des in den SOₓ-Abscheider (11) strömenden Abgases über einem vorbestimmten Mageranteil gehalten wird.

5. Abgasreinigungssystem für einen Verbrennungsmotor nach Anspruch 3, wobei, in der zweiten Kohlenwasserstoffzuführsteuerung, der Kohlenwasserstoff in das Abgas stromauf des SOₓ-Abscheiders (11) eingeführt wird, so dass ein Mageranteil des Kraftstoff-Luft-Verhältnisses des in den SOₓ-Abscheider (11) strömenden Abgases über einem vorbestimmten Mageranteil gehalten wird.

6. Abgasreinigungssystem für einen Verbrennungsmotor nach Anspruch 4, wobei der vorbestimmte Mageranteil umso größer eingestellt wird, je niedriger die Temperatur des SOₓ-Abscheiders (11) ist.

7. Abgasreinigungssystem für einen Verbrennungsmotor nach Anspruch 5, wobei der vorbestimmte Mageranteil um größer eingestellt wird, je niedriger die Temperatur des SOₓ-Abscheiders (11) ist.

8. Abgasreinigungssystem für einen Verbrennungsmotor nach Anspruch 1, wobei, in der zweiten Kohlenwasserstoffzuführsteuerung, der Kohlenwasserstoff in das Abgas stromauf des SOₓ-Abscheiders (11) eingeführt wird, so dass der Betrag eines lokalen Temperaturanstiegs des SOₓ-Abscheiders (11) pro Zeiteinheit geringer gehalten wird als der Betrag des lokalen Temperaturanstiegs des SOₓ-Abscheiders pro Zeiteinheit, der in der ersten Kohlenwasserstoffzuführsteuerung erlaubt ist.

9. Abgasreinigungssystem für einen Verbrennungsmotor nach Anspruch 8, wobei, in der zweiten Kohlenwasserstoffzuführsteuerung, der Kohlenwasserstoff in das Abgas stromauf des SOₓ-Abscheiders (11) eingeführt wird, so dass ein Betrag des Temperaturanstiegs des SOₓ-Abscheiders (11) insgesamt pro Zeiteinheit geringer gehalten wird als ein Betrag des Temperaturanstiegs des SOₓ-Abscheiders (11) insgesamt pro Zeiteinheit, der in der ersten Kohlenwasserstoffzuführsteuerung erlaubt ist.

10. Abgasreinigungssystem für einen Verbrennungsmotor nach Anspruch 8, wobei ein Partikelfilter (129), der Partikel in dem Abgas abscheidet, in der Abgasleitung stromabwärts des SOₓ-Abscheiders (11) angeordnet ist, eine vorbestimmte Bedingung eine Abbrennbedingung ist, bei der entschieden wird, ob die Temperatur des Partikelfilters (129) auf eine vorbestimmte Soll-Temperatur erhöht werden soll, um die durch den Partikelfilter (129) abgeschiedenen Partikel wegzubrennen, und, wenn die zweite Kohlenwasserstoffzuführsteuerung ausgeführt wird, wenn die Abbrennbedingung steht, in der zweiten Kohlenwasserstoffzuführsteuerung der Kohlenwasserstoff in das Abgas stromauf des SOₓ-Abscheiders (11) unter Verwendung einer Temperatur als eine Soll-Temperatur zugeführt wird, die niedriger als die Soll-Temperatur in der ersten Kohlenstoffzuführsteuerung in dem Fall ist, in dem die erste Kohlenwasserstoffzuführsteuerung ausgeführt wird, wenn die Abbrennbedingung steht.

11. Abgasreinigungssystem für einen Verbrennungsmotor nach Anspruch 9, wobei, in der zweiten Kohlenwasserstoffszuführsteuerung, der Kohlenwasserstoff in das Abgas stromauf des SOₓ-Abscheiders (11) eingeführt wird, so dass eine Temperaturamplitude des SOₓ geringer gehalten wird als eine Temperaturamplitude des SOₓ-Abscheiders (11), die in der ersten Kohlenwasserstoffzuführsteuerung erlaubt ist.

12. Abgasreinigungssystem für einen Verbrennungsmotor nach Anspruch 10, wobei, in der zweiten Kohlenwasserstoffzuführsteuerung, der Kohlenwasserstoff in das Abgas stromauf des SOₓ-Abscheiders (11) eingeführt wird, so dass eine Temperaturamplitude des SOₓ geringer gehalten wird als eine Temperaturamplitude des SOₓ-Abscheiders (11), die in der ersten Kohlenwasserstoffzuführsteuerung erlaubt ist.

13. Abgasreinigungssystem für einen Verbrennungsmotor nach Anspruch 8, wobei ein NOₓ-Absorptionsmittel (47), das ein NOₓ in dem Abgas absorbiert, in der Abgasleitung stromabwärts des SOₓ-Abscheiders (11) angeordnet ist, die vorbestimmte Bedingung eine NOₓ-Freisetzungsbedingung ist, bei der entschieden wird, dass das NOₓ-Absorptionsmittel (47) das NOₓ freisetzen soll, und, wenn die zweite Kohlenwasserstoffzuführsteuerung ausgeführt wird, wenn die NOₓ-Freisetzungsbedingung steht, in der zweiten Kohlenwasserstoffzuführsteuerung, der Kohlenwasserstoff in das Abgas stromauf des SOₓ-Abscheiders (11) eingeführt wird, so dass eine Temperaturamplitude des SOx-Abscheiders (11) kleiner gehalten wird als eine Temperaturamplitude des SOₓ-Abscheiders (11), die in der ersten Kohlenwasserstoffzuführsteuerung in dem Fall erlaubt ist, in dem die erste Kohlenwasserstoffzuführsteuerung ausgeführt wird, wenn die NOₓ-Freisetzungsbedingung steht.

14. Abgasreinigungssystem für einen Verbrennungsmotor nach Anspruch 1, wobei ein Oxidationskatalysator (26), der mit einer Oxidationsfähigkeit versehen ist, die höher als sogar die Oxidationsfähigkeit des SOₓ-Abscheiders (11) ist, in der Abgasleitung stromauf des SOₓ-Abscheiders (11) angeordnet ist.

## Revendications

1. Système de purification d'échappement d'un moteur à combustion interne proposant un piège de SOx (oxyde de soufre) (11) pour piéger le SOx dans le gaz d'échappement à l'intérieur d'un passage d'échappement, ledit piège de SOx (11) piégeant le SOx dans le gaz d'échappement lorsqu'un rapport air - carburant du gaz d'échappement s'écoulant dans ledit piège de SOx (11) est un rapport air - carburant plus appauvri qu'un rapport air - carburant stoechiométrique et qu'une température dudit piège de SOx (11) est inférieure à une température prédéterminée et libérant le SOx piégé lorsque le rapport air - carburant du gaz d'échappement s'écoulant dans ledit piège de SOx (11) est le rapport air - carburant stoechiométrique ou un rapport air - carburant plus riche et que la température dudit piège de SOx (11) est supérieure à ladite température prédéterminée et réalisant un contrôle d'alimentation de HC (hydrocarbure) alimentant le HC dans le gaz d'échappement en amont du piège de SOx (11) lorsqu'une condition prédéterminée est toujours valable, ledit système de purification d'échappement d'un moteur à combustion interne exécute, en tant que contrôle d'alimentation de HC, tout d'abord le contrôle d'alimentation de HC alimentant le HC dans le gaz d'échappement en amont du piège de SOx (11) selon un modèle prédéterminé lorsque la quantité de SOx que le piège de SOx (11) piège, est inférieure à une quantité prédéterminée et exécute, en tant que contrôle d'alimentation de HC, un deuxième contrôle d'alimentation de HC, alimentant le HC dans le gaz d'échappement en amont du piège de SOx (11) selon un modèle différent dudit modèle prédéterminé, ledit modèle empêchant la température du piège de SOx (11) d'augmenter localement plus que ladite température prédéterminée ou supprimant la formation d'une région dans le gaz d'échappement s'écoulant dans le piège de SOx (11) où le rapport air - carburant devient localement riche, lorsque la quantité de SOx que le piège de SOx (11) piège, est supérieure à ladite quantité prédéterminée.

2. Système de purification d'échappement d'un moteur à combustion interne selon la revendication 1, dans lequel, dans ledit premier contrôle d'alimentation de HC, une quantité prédéterminée de HC est alimentée dans le gaz d'échappement en amont du piège de SOx (11) par unité de temps, alors que dans ledit deuxième contrôle d'alimentation de HC, une quantité de HC inférieure à ladite quantité prédéterminée est alimentée dans le gaz d'échappement en amont du piège de SOx (11) par unité de temps.

3. Système de purification d'échappement d'un moteur à combustion interne selon la revendication 1, dans lequel, dans ledit deuxième contrôle d'alimentation de HC, HC avec une capacité de diffusion plus importante dans le gaz d'échappement que le HC alimenté dans le gaz d'échappement en amont du piège de SOx (11) dans ledit premier contrôle d'alimentation de HC, est alimenté dans le gaz d'échappement en amont du piège de SOx (11).

4. Système de purification d'échappement d'un moteur à combustion interne selon la revendication 2, dans lequel, dans ledit deuxième contrôle d'alimentation de HC, HC est alimenté dans le gaz d'échappement en amont du piège de SOx (11) de sorte qu'un degré d'appauvrissement du rapport air - carburant du gaz d'échappement s'écoulant dans le piège de SOx (11) est plus important qu'un degré d'appauvrissement prédéterminé.

5. Système de purification d'échappement d'un moteur à combustion interne selon la revendication 3, dans lequel, dans ledit deuxième contrôle d'alimentation de HC, HC est alimenté dans le gaz d'échappement en amont du piège de SOx (11), de sorte qu'un degré d'appauvrissement du rapport air - carburant du gaz d'échappement s'écoulant dans le piège de SOx (11) est plus important qu'un degré d'appauvrissement prédéterminé.

6. Système de purification d'échappement d'un moteur à combustion interne selon la revendication 4, dans lequel plus la température du piège de SOx (11) est basse, plus ledit degré d'appauvrissement prédéterminé est important.

7. Système de purification d'échappement d'un moteur à combustion interne selon la revendication 5, dans lequel plus la température du piège de SOx (11) est basse, plus ledit degré d'appauvrissement prédéterminé est important.

8. Système de purification d'échappement d'un moteur à combustion interne selon la revendication 1, dans lequel, dans ledit deuxième contrôle d'alimentation de HC, HC est alimenté dans le gaz d'échappement en amont du piège de SOx (11) de sorte que la quantité de montée locale en température du piège de SOx (11) par unité de temps est inférieure à la quantité de montée locale en température du piège de SOx (11) par unité de temps autorisée dans ledit premier contrôle d'alimentation de HC.

9. Système de purification d'échappement d'un moteur à combustion interne selon la revendication 8, dans lequel, dans ledit deuxième contrôle d'alimentation de HC, HC est alimenté dans le gaz d'échappement en amont du piège de SOx (11) de sorte qu'une quantité de montée en température du piège de SOx (11) dans son ensemble par unité de temps est inférieure à une quantité de montée en température du piège de SOx (11) dans son ensemble par unité de temps autorisée dans ledit premier contrôle d'alimentation de HC.

10. Système de purification d'échappement d'un moteur à combustion interne selon la revendication 8, dans lequel un filtre à particules (12a) piégeant la matière particulaire dans le gaz d'échappement est agencé dans le passage d'échappement en aval dudit piège de SOx (11), l'une desdites conditions prédéterminées est une condition de combustion dans laquelle il est décidé si la température dudit filtre à particules (12a) doit être augmentée jusqu'à une température cible prédéterminée pour faire brûler la matière particulaire piégée par le filtre à particules (12a) et, lorsque ledit deuxième contrôle d'alimentation de HC est exécuté lorsque ladite condition de combustion s'impose, dans ledit deuxième contrôle d'alimentation de HC, HC est alimenté dans le gaz d'échappement en amont du piège de SOx (11) en utilisant en tant que température cible, une température inférieure à ladite température cible dans ledit premier contrôle d'alimentation de HC dans le cas dans lequel ledit premier contrôle d'alimentation de HC est exécuté lorsque ladite condition de combustion est toujours valable.

11. Système de purification d'échappement d'un moteur à combustion interne selon la revendication 9, dans lequel, dans ledit deuxième contrôle d'alimentation de HC, HC est alimenté dans le gaz d'échappement en amont du piège de SOx (11) de sorte qu'une amplitude de température du SOx est inférieure à une amplitude de température du piège de SOx (11) autorisée dans ledit premier contrôle d'alimentation de HC.

12. Système de purification d'échappement d'un moteur à combustion interne selon la revendication 10, dans lequel, dans ledit deuxième contrôle d'alimentation de HC, HC est alimenté dans le gaz d'échappement en amont du piège de SOx (11) de sorte qu'une amplitude de température du SOx est inférieure à une amplitude de température du piège de SOx (11) autorisée dans ledit premier contrôle d'alimentation de HC.

13. Système de purification d'échappement d'un moteur à combustion interne selon la revendication 8, dans lequel, un absorbant de NOx (47) absorbant le NOx dans le gaz d'échappement est agencé dans le passage d'échappement en aval dudit piège de SOx (11), l'une desdites conditions prédéterminées est une condition de libération de NOx dans laquelle on détermine que ledit absorbant de NOx (47) doit libérer NOx et, lorsque ledit deuxième contrôle d'alimentation de HC est réalisé quand ladite condition de libération de NOx est toujours valable, dans ledit deuxième contrôle d'alimentation de HC, HC est alimenté dans le gaz d'échappement en amont du piège de SOx (11) de sorte qu'une amplitude de température du piège de SOx (11) est inférieure à une amplitude de température du piège de SOx (11) autorisée dans ledit premier contrôle d'alimentation de HC dans le cas dans lequel ledit premier contrôle d'alimentation de HC est exécuté lorsque ladite condition de libération de NOx est toujours valable.

14. Système de purification d'échappement d'un moteur à combustion interne selon la revendication 1, dans lequel un catalyseur d'oxydation (26) prévu avec une capacité d'oxydation supérieure à la capacité d'oxydation dudit piège de SOx (11) est agencé dans le passage d'échappement en amont dudit piège de SOx (11).
